# EUROPEAN PATENT SPECIFICATION

(11) **EP 1 874 830 B1**
(45) Date of publication and mention of the grant of the patent: **20.10.2010**
(21) Application number: 06724350.1
(22) Date of filing: 15.04.2006
(51) Int. Cl.: C08F 10/02, C08F 4/69, C08F 4/6592, C08J 5/18

(54) **MOLDING COMPOSITION COMPRISING POLYETHYLENE FOR PREPARING FILMS AND PROCESS FOR PREPARING THE MOLDING COMPOSITION IN THE PRESENCE OF A MIXED CATALYST**
POLYETHYLENFORMMASSE ZUR HERSTELLUNG VON FOLIEN UND VERFAHREN ZUR HERSTELLUNG DER FORMMASSE IN GEGENWART EINES GEMISCHTEN KATALYSATORS
COMPOSITION DE MOULAGE AU POLYETHYLENE POUR L'ELABORATION DE FILMS, ET PROCEDE D'ELABORATION DE COMPOSITION DE MOULAGE EN PRESENCE D'UN CATALYSEUR MELANGE

(30) Priority: 25.04.2005 DE 102005019395; 27.05.2005 US 685168 P
(43) Date of publication of application: 09.01.2008
(73) Proprietor: Basell Polyolefine GmbH, 50389 Wesseling (DE)
(72) Inventor: MIHAN, Shahram, 65812 Bad Soden (DE); LILGE, Dieter, 67117 Limburgerhof (DE); KARER, Rainer, 67657 Kaiserslautern (DE); VOGT, Heinz, 65929 Frankfurt (DE); KIPKE, Jennifer, 20257 Hamburg (DE)
(74) Representative: Reiss, Gilles François
(86) International application number: PCT/EP2006/003474
(87) International publication number: WO 2006/114209

(56) References cited:
- US-A1- 2002 010 077
- US-B1- 6 608 000
- US-B1- 6 780 809

## Description

The present invention relates to a molding composition comprising polyethylene and to a process for preparing the molding composition in the presence of a fixed catalyst comprising a prepolymerized chromium compound and a metallocene compound. Films having a surprisingly high transparency, while having, at the same time, good mechanical properties, can be produced starting from such a molding composition comprising polyethylene.

Over the recent period, polyethylene blends have been used for producing films of all types. In many applications, particularly in the food sector, there is not only a strong felt need of films having good mechanical properties, for example in terms of tensile strength, but also a need of films having optical qualities. Gloss and transparency usually decrease as density increases, so that, in particular, films having medium densities and good optical properties are difficult to obtain.

The use of catalyst compositions comprising two or more different olefin polymerization catalysts of the Ziegler type or of the metallocene type is known. For example, the combination of two catalysts of which one produces a polyethylene having a mean molar mass which is different from that produced by the other can be used for preparing reactor blends having broad molecular weight distributions (WO 95/11264). The copolymers of ethylene with higher α-olefins such as propene, 1-butene, 1-pentene, 1-hexene or 1-octene, known as LLDPE (linear low density polyethylene), which are formed using classical Ziegler-Natta catalysts based on titanium differ from an LLDPE which is prepared using a metallocene. The number of side chains formed by incorporation of the comonomer and their distribution, known as the short chain branching distribution (SCBD), is very different when using the various catalyst systems. The number and distribution of the side chains has a strong influence on the crystallization behavior of the ethylene copolymers. While the flow properties and thus the processing of these ethylene copolymers depend mainly on their molar mass and molar mass distribution, the mechanical properties are, in particular, dependent on the short chain branching distribution. However, the short chain branching distribution also plays a role in particular processing processes, e.g. in film extrusion, in which the crystallization behavior of the ethylene copolymers during cooling of the extruded film is an important factor in determining how quickly and in what quality a film can be extruded. In view of the many possible combinations, finding the correct combination of catalysts for a balanced combination of good mechanical properties and good processability is difficult.

EP-A-339571 describes mixed catalysts comprising chromium-containing catalysts and metallocene compounds. The resulting polyethylene molding compositions have a very broad molar mass distribution and are suitable for producing blow-molded bodies.

WO 97/08213 describes mixed catalysts comprising chromium-containing catalysts and metallocene compounds which are both applied to various supports. The resulting polyethylene molding compositions have very broad molar mass distributions and are especially suitable for producing blow-molded bodies.

A main object of the present invention is therefore that of providing a molding composition comprising polyethylene obtainable in only a single process step. The molding composition obtainable in this way should be able to be processed to give films having a very high transparency and gloss, while having, at the same time, good mechanical properties, preferably to produce blown films.

This object is achieved by a molding composition comprising polyethylene and having a density in the range from 0.915 to 0.955 g/cm³, an MI in the range from 0 to 3.5 g/10 min, an MFR in the range from 5 to 50, a polydispersity M_{w}/Mₙ in the range from 5 to 20, and a z-average molar mass M_{z} of less than 1 million g/mol.

The density of the molding composition of the invention is in the range from 0.915 to 0.955 g/cm³, preferably from 0.925 to 0.95 g/cm³, and particularly preferably in the range from 0.93 to 0.945 g/cm³. The MI of the molding composition of the invention is in the range from 0 to 3.5 g/10min, preferably in the range from 0 to 3 g/10min and, more preferably from 0.1 to 2.5 g/10min. For the purposes of the present invention, the expression "MI" stands, in a known manner, for "melt index" and is determined at 190°C under a load of 2.16 kg (190°C/2.16 kg) in accordance with ISO1133. The MFR of the molding composition of the invention is in the range from 5 to 50, preferably in the range from 10 to 30 and, more preferably from 14 to 25. For the purposes of the present invention, the expression "MFR" stands, in a known manner, for "melt flow ratio" and corresponds to the ratio of HLMI to MI, where the expression "HLMI" stands, for the purposes of the present invention, for "high load melt index" and is determined at 190°C under a load of 21.6 kg (190°C/21.6 kg) in accordance with ISO1133. The molding composition of the invention has a polydispersity M_{w}/Mₙ in the range from 5 to 20, preferably from 5.01 to 10, and particularly preferably from 5.1 to 8.

The z-average molar mass M_{z} of the molding composition of the invention is less than 1 million g/mol, preferably in the range from 150 000 g/mol to 800 000 g/mol, and particularly preferably from 200 000 g/mol to 600 000 g/mol. The definition of the z-average molar mass may be found, for example, in High Polymers, vol. XX, by Raff and Doak, Interscience Publishers, John Wiley & Sons, 1965, p. 443.

The molding composition of the invention preferably comprises an amount of less than 0.5% by weight, preferably from 0 to 0.3% by weight, and in particular less than 0.1% by weight, based on the total weight of the molding composition, of polyethylene having a molar mass greater than 1 million g/mol, preferably greater than 900 000 g/mol. The proportion of polyethylene having a molar mass greater than 1 million g/mol is determined here by gel permeation chromatography using a method based on the determination of molar masses.

For the purposes of the present invention, the term polyethylene encompasses polymers of ethylene such as ethylene homopolymers and/or ethylene copolymers. Possible comonomers which can be present in addition to ethylene in the ethylene copolymer part of the molding composition of the invention, either individually or in admixture with one another, are all 1-alkenes having from 3 to 10 carbon atoms, e.g. propene, 1-butene, 1-pentene, 1-hexene, 4-methyl-1-pentene, 1-heptene, 1-octene and 1-decene. The ethylene copolymer preferably comprises, as comonomer unit, 1-alkenes having from 4 to 8 carbon atoms, e.g. 1-butene, 1-pentene, 1-hexene, 4-methylpentene or 1-octene in polymerized form. Particular preference is given to 1-alkenes selected from the group consisting of 1-butene, 1-hexene and 1-octene. The ethylene copolymer preferably comprises from 0.01 to 5% by weight of comonomer, and particularly preferably from 0.1 to 2% by weight of comonomer.

The weight average molar mass M_{w} of the molding composition of the invention is preferably in the range from 5000 g/mol to 700 000 g/mol, preferably from 30 000 g/mol to 500 000 g/mol, and particularly preferably from 70 000 g/mol to 450 000 g/mol.

The molar mass distribution of the molding composition of the invention can be monomodal, bimodal or multimodal. For the purposes of the present patent application, a monomodal molar mass distribution means that the molar mass distribution has a single maximum. For the purposes of the present patent application, a bimodal molar mass distribution means that the molar mass distribution has, starting out from a maximum, at least two points of inflection on one flank. The molar mass distribution is preferably monomodal.

The molding composition of the invention preferably has from 0.01 to 20 branches/1000 carbon atoms, preferably from 1 to 15 branches/1000 carbon atoms, and particularly preferably from 3 to 10 branches/1000 carbon atoms. The branches/1000 carbon atoms are determined by means of ¹³C-NMR, as described by James C. Randall, JMS-REV. Macromol. Chem. Phys., C29 (2&3), 201-317 (1989), and are based on the total CH₃ group content/1000 carbon atoms.

The molding composition of the invention has at least 0.05 vinyl groups/1000 carbon atoms, preferably from 0.1 to 5 vinyl groups/1000 carbon atoms, and particularly preferably from 0.15 to 3 vinyl groups/1000 carbon atoms. The content of vinyl groups/1000 carbon atoms is determined by means of IR, ASTM D 6248-98. The expression vinyl groups refers to -CH=CH₂ groups for the purposes of the present text. This expression does not comprise vinylidene groups and internal olefinic groups. Vinyl groups are usually attributed to a polymer termination reaction after an ethylene insertion, while vinylidene end groups are usually formed by a polymer termination reaction after a comonomer insertion. Vinylidene and vinyl groups can be functionalized or crosslinked subsequently, with vinyl groups usually being more suitable for these subsequent reactions.

The molding composition of the invention preferably has at least 0.05 vinylidene groups/1000 carbon atoms, in particular from 0.1 to 1 vinylidene groups/1000 carbon atoms and particularly preferably from 0.12 to 0.5 vinylidene groups/1000 carbon atoms. The determination is carried out in accordance with ASTM D 6248-98.

The molding composition of the invention preferably has a mixing quality, measured in accordance with ISO 13949, of less than 3, in particular from 0 to 2.5. This value refers to the polyethylene which is taken directly from the reactor, namely the polyethylene powder, without prior melting in an extruder. This polyethylene powder is preferably obtainable by polymerization in a single reactor.

The molding composition of the invention preferably has a degree of long chain branching λ (lambda) of from 0 to 2 long chain branches/1000 carbon atoms, and particularly preferably from 0.1 to 1.5 long chain branches/1000 carbon atoms. The degree of long chain branching λ (lambda) was measured by means of light scattering, as described, for example, in ACS Series 521, 1993, Chromatography of Polymers, Ed. Theodore Provder; Simon Pang and Alfred Rudin: Size-Exclusion Chromatographic Assessment of Long-Chain Branch Frequency in Polyethylenes, page 254-269.

Furthermore, the molding compositions of the invention may further comprise from 0 to 6% by weight, preferably from 0.1 to 1% by weight, based on the mass of the ethylene polymers, of at least one additive, for example the conventional additives for thermoplastics, e.g. processing stabilizers, stabilizers against the effects of light and heat, conventional additives such as lubricants, antioxidants, antiblocking agents and antistatics, and, if appropriate, dyes. Preference is given to, *inter alia,* lubricants (Ca stearate); conventional stabilizers, for example phenols, phosphites, benzophenone, benzotriazoles or thioethers; fillers, for example TiO₂, chalk or carbon black; conventional pigments, for example TiO₂. ultramarine blue. The additives are usually incorporated by mixing with the molding composition using the conventional methods of plastics technology, for example melt extrusion, rolling, compacting or solution mixing. Preference is given to the melt extrusion, for example in a twin-screw extruder. The extrusion temperatures are generally in the range from 140 to 250°C.

Furthermore, the use of the molding composition of the invention for producing films has been found. Films in which the molding composition of the invention and its preferred embodiments is present as essential component have also been found.

The present invention relates also to films in which the molding composition of the invention is present as essential component, for example films comprising a polymer material including a molding composition as defined above, the molding composition being preferably present in an amount of from 50 to 100% by weight, more preferably from 60 to 90% by weight, based on the total polymer material. In particular, the present invention relates also to films comprising at least one layer including from 50 to 100% by weight of the molding composition of the invention.

The film is usually produced by plasticization of the molding composition at a melt temperature in the range from 190 to 230°C, extrusion of the plasticized molding composition, for example through a slit die onto a cooling roller, and cooling of the molding composition so extruded. The film may, if required, further comprise at least one additive, for example conventional additives such as stabilizers, antioxidants, antistatics, lubricants, antiblocking agents or pigments in amounts of from 0 to 30% by weight.

The film of the invention is suitable for producing films having a thickness of from 5 µm to 2.5 mm. The films can, for example, be produced by the blown film extrusion process with a thickness of from 5 to 250 µm or by the flat film extrusion process with a thickness of from 10 µm to 2.5 mm. In blown film extrusion, the molding composition is extruded as a melt through an annular die. The molten tube is subsequently blown up with air and taken off at a velocity which is greater than the velocity at which the same comes out from the die. With intensive air cooling, the melt goes below the crystallite melting point at the frost line. Here, the desired film bubble dimensions are fixed. The film bubble is subsequently collapsed, cut if necessary and rolled up by means of a suitable winding apparatus. The molding compositions of the invention can be produced with a short or long neck by means of the mode of operation. In flat film extrusion, the films are, for example, produced on chill roll plants or thermoforming film plants. Furthermore, composite films can be obtained on coating or calendering plants. This applies particularly to composite films in which paper, aluminum or fabric support webs are incorporated into the composite structure. The films of the invention may have at least one layer, preferably at least a plurality of layers, and preferably have one layer.

The molding compositions of the invention are highly suitable for, in particular, producing films on blown film and cast film plants at high outputs. The films comprising the molding compositions of the invention display very good mechanical properties, high shock resistance and high tear strength combined with very good optical properties, in particular transparency and gloss. They are suitable, in particular, for the packaging sector, for example as heat sealing films, both for heavy duty sacks and for the food sector. Furthermore, the films display only a low blocking tendency and can therefore be handled by machine without additions of lubricants and antiblocking agents, or with only small additions thereof.

The films of the invention are suitable, in particular, as surface protection films, stretch films, hygiene films, office films, heavy duty packaging films, composite films and calendered films. As a result of the particularly good optical properties, the films of the invention are particularly suitable for producing carrier bags, since high-quality printing is possible here, as calendered films for heat-sealing layers in food packaging, since the films also have a low level of odor and taste, and automatic packaging films, i.e. films suitable to be processed in automatic machines, since the films can be recessed on fast-running plants.

The films of the invention having a thickness of 50 µm preferably have a haze of less than 40%, in particular in the range from 5 to 35% and particularly preferably from 10 to 33%. The haze is measured in accordance with ASTM D 1003-00 on a BYK Gardener Haze Guard Plus Device on at least 5 films having a size of 10x10 cm. The dart drop impact test on the films of the invention having a thickness of 50 µm preferably gives a value greater than 130 g, in particular in the range from 150 to 500 g and particularly preferably from 170 to 400 g. The DDI is measured in accordance with ASTM D 1709, method A. The films of the invention having a thickness of 50 µm preferably have a transparency of greater than 90%, preferably in the range from 91 to 100% and in particular in the range from 93 to 99%. The transparency was measured in accordance with ASTM D 1746-03 on a BYK Gardener Haze Guard Plus Device, calibrated using a calibration cell 77.5. The gloss of the films of the invention having a thickness of 50 µm at 60° is preferably greater than 50, preferably in the range from 52 to 90 and in particular from 55 to 80. The gloss was determined in accordance with ASTM D 2457-03 on a gloss meter 60° with a vacuum plate for clamping the film.

The scrap obtained in the production of films can be reused and mixed with the fresh molding composition according to the invention. The scrap is usually comminuted and fed as regrind via a side extruder into the main extruder.

The molding composition of the invention is highly suitable, for example, for producing films on blown film plants at high outputs. Films comprising the molding composition of the invention display good mechanical and optical properties. The high puncture strength of the films obtained therefrom is also noteworthy.

We have also found a catalyst system for preparing the molding composition of the invention, the use of the catalyst system for the polymerization of ethylene or copolymerization of ethylene with 1-alkenes having from 3 to 10 carbon atoms and a process for preparing the molding composition of the invention by polymerization of ethylene or copolymerization of ethylene with 1-alkenes having from 3 to 10 carbon atoms in the presence of the catalyst system.

The molding composition of the invention can be obtained using the catalyst system of the invention and in particular its preferred embodiments.

The invention also provides a process for preparing the molding composition of the invention by copolymerization of ethylene, optionally in the presence of 1-alkenes of the formula R¹CH=CH₂, where R¹ is hydrogen or an alkyl radical having from 1 to 10 carbon atoms, at a temperature of from 20 to 200°C and a pressure of from 0.5 to 100 bar, corresponding to from 0.05 to 1 MPa, in the presence of a mixed catalyst comprising a prepolymerized chromium compound and a metallocene compound. Suitable 1-olefins are, for example, ethylene, propylene, 1-butene, 1-hexene, 4-methyl-1-pentene or 1-octene.

Preference is given to polymerizing ethylene alone or in a mixture of at least 50% by weight of ethylene and not more than 50% by weight of another 1-alkene of the above formula. In particular, ethylene alone or a mixture of at least 80% by weight of ethylene and not more than 20% by weight of another 1-alkene of the above formula is polymerized.

As a result of the high activity of the mixed catalyst used, the process of the invention gives polymers having a very low transition metal and halogen content and therefore extremely good values in the color stability and corrosion test, but especially in the transparency.

The mixed catalyst comprises a prepolymerized chromium compound and a metallocene compound. The chromium compound is preferably immobilized on a solid support in a step a), the immobilized chromium compound is then activated in a step b) by heat treatment, the activated chromium compound is then prepolymerized in a step c) and the prepolymerized chromium compound is then used in a step d) as support material for the immobilization of the metallocene compound.

The invention further provides the mixed catalyst obtainable by this process.

As support component, preference is given to finely divided supports which can be any organic or inorganic solids. In particular, the support component may be a porous support such as talc, a sheet silicate such as montmorillonite, mica, an inorganic oxide or a finely divided polymer powder (e.g. polyolefin or a polymer having polar function groups).

Organic support materials such as finely divided polyolefin powders (e.g. polyethylene, polypropylene or polystyrene) can also be used and are preferably likewise freed of adhering moisture, solvent residues or other impurities by appropriate purification and drying operations before use. It is also possible to use functionalized polymer supports, e.g. ones based on polystyrene, polyethylene, polypropylene or polybutylene, via whose functional groups, for example ammonium or hydroxy groups, at least one of the catalyst components can be immobilized. It is also possible to use polymer blends.

Inorganic oxides suitable as support component may be found among the oxides of the elements of groups 2, 3, 4, 5, 13, 14, 15 and 16 of the Periodic Table of the Elements. Examples of oxides preferred as supports comprise silicon dioxide, aluminum oxide and mixed oxides of the elements calcium, aluminum, silicon, magnesium or titanium and also corresponding oxide mixtures. Other inorganic oxides which can be used alone or in combination with the abovementioned preferred oxidic supports are, for example, MgO, CaO, ZrO₂, TiO₂, B₂O₃ or mixtures thereof.

Further preferred inorganic support materials are inorganic halides such as MgCl₂ or carbonates such as Na₂CO₃, K₂CO₃, CaCO₃, MgCO₃, sulfates such as Na₂SO₄, Al₂(SO₄)₃, BaSO₄, nitrates such as KNO₃, Mg(NO₃)₂ or Al(NO₃)₃ or phosphates such as AlPO₄.

Further preferred inorganic supports are hydrotalcites and calcined hydrotalcite. In mineralogy, hydrotalcite is a natural mineral having the ideal formula

Mg₆Al₂(OH)₁₆CO₃· 4 H₂O

whose structure is derived from that of brucite Mg(OH)₂. Brucite crystallizes in a sheet structure with the metal ions in octahedral holes between two layers of close-packed hydroxyl ions, with only every second layer of the octahedral holes being occupied. In hydrotalcite, some magnesium ions are replaced by aluminum ions, as a result of which the packet of layers gains a positive charge. This is compensated by the anions which are located together with water of crystallization in the layers inbetween.

Such sheet structures are found not only in magnesium-aluminum hydroxides, but also generally in mixed metal hydroxides of the general formula

M(II)₂ₓ²⁺M(III)₂³⁺(OH)₄ₓ₊₄ · A_{2/n}ⁿ⁻ · z H₂O

which have a sheet structure and in which M(II) is a divalent metal such as Mg, Zn, Cu, Ni, Co, Mn, Ca and/or Fe and M(III) is a trivalent metal such as Al, Fe, Co, Mn, La, Ce and/or Cr, x is from 0.5 to 10 in steps of 0.5, A is an interstitial anion and n is the charge on the interstitial anion which can be from 1 to 8, usually from 1 to 4, and z is an integer from 1 to 6, in particular from 2 to 4. Possible interstitial anions are organic anions such as alkoxide anions, alkyl ether sulfates, aryl ether sulfates or glycol ether sulfates, inorganic anions such as, in particular, carbonate, hydrogencarbonate, nitrate, chloride, sulfate or B(OH)₄⁻ or polyoxo metal anions such as Mo₇O₂₄⁶⁻ or V₁₀O₂₈⁶⁻. However, a mixture of a plurality of such anions can also be present.

Accordingly, all such mixed metal hydroxides having a sheet structure should be regarded as hydrotalcites for the purposes of the present invention.

Calcined hydrotalcites can be prepared from hydrotalcites by calcination, i.e. heating, by means of which, *inter alia,* the desired hydroxyl group content can be set. In addition, the crystal structure also changes. The preparation of the calcined hydrotalcites used according to the invention is usually carried out at temperatures above 180°C. Preference is given to calcination for a period of from 3 to 24 hours at temperatures of from 250°C to 1000°C and in particular from 400°C to 700°C. It is possible for air or inert gas to be passed over the solid or a vacuum to be applied during this step.

On heating, the natural or synthetic hydrotalcites firstly give off water, i.e. drying occurs. On further heating, the actual calcination, the metal hydroxides are converted into the metal oxides by elimination of hydroxyl groups and interstitial anions; OH groups or interstitial anions such as carbonate can also still be present in the calcined hydrotalcites. A measure of this is the ioss on ignition. This is the weight loss experienced by a sample which is heated in two steps firstly for 30 minutes at 200°C in a drying oven and then for one hour at 950°C in a muffle furnace.

The calcined hydrotalcites used as supports are thus mixed oxides of the divalent and trivalent metals M(II) and M(III), with the molar ratio of M(II) to M(III) generally being in the range from 0.5 to 10, preferably from 0.75 to 8 and in particular from 1 to 4. Furthermore, normal amounts of impurities, for example Si, Fe, Na, Ca or Ti and also chlorides and sulfates, can also be present.

Preferred calcined hydrotalcites are mixed oxides in which M(II) is magnesium and M(III) is aluminum. Such aluminum-magnesium mixed oxides are obtainable from Condea Chemie GmbH (now Sasol Chemie), Hamburg, under the trade name Puralox Mg.

Preference is also given to calcined hydrotalcites in which the structural transformation is complete or virtually complete. Calcination, i.e. transformation of the structure, can be confirmed, for example, by means of X-ray diffraction patterns.

Preference is also given to finely divided silica xerogels as support materials, and these can be prepared, for example, as described in DE-A 25 40 279. The finely divided silica xerogels are preferably prepared by:
α) use of a particulate silica hydrogel which comprises from 10 to 25% by weight of solids (calculated as SiO₂) and is largely spherical and has a particle diameter of from 1 to 8 mm and is obtained by
   α1) introducing a sodium or potassium water glass solution into a rotating stream of an aqueous mineral acid, both longitudinally and tangentially to the stream,
   α2) spraying the resulting silica hydrosol into a gaseous medium to form droplets,
   α3) allowing the sprayed hydrosol to solidify in the gaseous medium,
   α4) freeing the resulting largely spherical particles of the hydrogel of salts by washing without prior aging,
β) extraction of at least 60% of the water present in the hydrogel by means of an organic liquid,
χ) drying of the resulting gel until no weight loss occurs at 180°C and a reduced pressure of 30 mbar over a period of 30 minutes (xerogel formation) and
δ) adjustment of the particle diameter of the xerogel obtained to from 20 to 2000 µm.

In the first step α) of the preparation of the support material, it is important that a silica hydrogel which has a relatively high solids content of from 10 to 25% by weight (calculated as SiO₂), preferably from 12 to 20% by weight, particularly preferably from 14 to 20% by weight, and is largely spherical is used. This silica hydrogel has been prepared in a specific way, as described in the steps α1) to α4). The steps α1) to α3) are described in more detail in DE-A 21 03 243. Step α4), namely washing of the hydrogel, can be carried out in any way, for example according to the countercurrent principle using water which is at a temperature of up to 80°C and has been made slightly alkaline (pH up to about 10) by means of ammonia.

The extraction of the water from the hydrogel (step β)) is preferably carried out using an organic liquid which is selected from the group consisting of C₁-C₄-alcohols and/or C₃-C₅-ketones and is particularly preferably miscible with water. Particularly preferred alcohols are tert-butanol, i-propanol, ethanol and methanol. Among the ketones, acetone is preferred. The organic liquid can also consist of mixtures of the abovementioned organic liquids, and in any case the organic liquid prior to the extraction comprises less than 5% by weight, preferably less than 3% by weight, of water. The extraction can be carried out in conventional extraction apparatuses, e.g. column extractors.

Drying (step χ)) is preferably carried out at temperatures of from 30 to 140°C, particularly preferably from 80 to 110°C, and at pressures of preferably from 1.3 mbar to atmospheric pressure. Here, for reasons of the vapor pressure, an increase in temperature should be combined with an increase in pressure and vice versa.

The setting of the particle diameter of the resulting xerogel (step δ)) can be carried out in any way, e.g. by milling and sieving.

A further preferred support material is prepared, inter alia, by spray drying of milled, appropriately sieved hydrogels which for this purpose are mixed with water or an aliphatic alcohol. The primary particles are porous, granular particles of the appropriately milled and sieved hydrogel having a mean particle diameter of from 1 to 20 µm, preferably from 1 to 5 µm. Preference is given to milled and sieved SiO₂ hydrogels.

Preference is given to silica gels as solid supports for the mixed catalysts of the invention, since particles whose size and structure make them particularly suitable as supports for olefin polymerization can be produced from this material. Spherical or granular silica gels are preferred. Spray-dried silica gels, which are spherical agglomerates of smaller granular particles, namely the primary particles, have been found to be particularly useful. The silica gels can be dried and/or calcined before they are used.

The supports used preferably have a specific surface area in the range from 10 to 1000 m²/g, a pore volume in the range from 0.1 to 5 ml/g and a mean particle diameter D50 of from 1 to 500 µm. Preference is given to supports having a specific surface area in the range from 50 to 700 m²/g, a pore volume in the range from 0.4 to 3.5 ml/g and a mean particle diameter D50 in the range from 5 to 350 µm. Particular preference is given to supports having a specific surface area in the range from 200 to 550 m²/g, a pore volume in the range from 0.5 to 3.0 ml/g and a mean particle diameter D50 of from 10 to 150 µm.

The inorganic support can be subjected to a thermal treatment, e.g. to remove adsorbed water. Such a drying treatment is generally carried out at temperatures in the range from 50 to 1000°C, preferably from 100 to 600°C, with drying at from 100 to 200°C preferably being carried out under reduced pressure and/or under a blanket of inert gas (e.g. nitrogen), or the inorganic support can be calcined at temperatures of from 200 to 1000°C to produce the desired structure of this solid and/or to set the desired OH concentration on the surface. The support can also be treated chemically using conventional desiccants such as metal alkyls, preferably aluminum alkyls, chlorosilanes or SiCl₄, or else methylaluminoxane. Appropriate treatment methods are described, for example, in WO 00/31090.

The inorganic support material can also be chemically modified. For example, treatment of silica gel with NH₄SiF₆ or other fluorinating agents leads to fluorination of the silica gel surface, or treatment of silica gels with silanes comprising nitrogen-, fluorine- or sulfur-comprising groups leads to correspondingly modified silica gel surfaces. Further suitable support materials can be obtained by modification of the pore surface, e.g. using compounds of the elements boron (BE-A-861,275), aluminum (US 4,284,5,27), silicon (EP-A 0 166 157) or phosphorus (DE-A 36 35 710).

The chromium compounds can comprise inorganic or organic groups. Preference is given to inorganic chromium compounds. Examples of suitable chromium compounds are, apart from chromium trioxide and chromium hydroxide, salts of trivalent chromium with organic and inorganic acids, e.g. chromium acetate, oxalate, sulfate and nitrate, and also chelates of trivalent chromium, e.g. chromium acetylacetonate. Among these, very particular preference is given to chromium(III) nitrate 9-hydrate and chromium acetylacetonate.

The support material is usually suspended in a solvent and the chromium compound is added thereto as a solution. However, it is also possible, for example, to dissolve the chromium compound in the suspension medium and subsequently add this to the support material. The support material is preferably slurried with the suspension medium and, if desired, an acid, preferably a C₁-C₆-carboxylic acid such as formic acid or acetic acid and particularly preferably formic acid, for from 10 to 120 minutes before addition of the chromium compound.

The application to the support is generally carried out using a weight ratio of support:chromium compound of from 100:0.1 to 100:10, in particular from 100:0.3 to 100:3.

Reaction step a) can be carried out at temperatures of from 0 to 100°C. For cost reasons, room temperature is preferred. The solvent and/or the acid can be partly or completely distilled off prior to the subsequent step b). The chromium-comprising support from step a) is preferably isolated and largely freed of suspension medium and acid prior to being reacted further.

As solvents, it is possible to use protic and aprotic solvents, depending on the type of chromium compound. In step a), preference is given to contacting the support in water or methanol with the chromium compound. Here, the chromium component is preferably dissolved in water or methanol and subsequently mixed with the suspended support. The reaction time is usually from 10 minutes to 5 hours.

The solvent is then preferably removed, preferably at temperatures of from 20 to 150°C and pressures of from 10 mbar to 1 mbar. The precatalyst obtained in this way can be completely dry or have a certain residual moisture content. However, the volatile constituents should make up an amount of not more than 20% by weight, in particular not more than 10% by weight, based on the as yet unactivated chromium-comprising precatalyst.

The precatalyst obtained from reaction step a) can immediately be subjected to step b) or else can be calcined beforehand in step a') in a water-free inert gas atmosphere at temperatures greater than 280°C. The calcination is preferably carried out at temperatures of from 280 to 800°C in a fluidized bed for from 10 to 1000 minutes.

The intermediate obtained in this way from step a) or a') is then activated under oxidizing conditions, for example in an oxygen-comprising atmosphere, at temperatures of from 400 to 1000°C in step b). The intermediate obtained from step a) or a') is preferably activated in the fluidized bed directly by replacing the inert gas by an oxygen-comprising gas and by increasing the temperature to the activation temperature. In this case, it is advantageously heated in a water-free gas stream comprising oxygen in a concentration of above 10% by volume over a period of from 10 to 1000 minutes, in particular from 150 to 750 minutes, at from 400 to 1000°C, in particular from 500 to 800°C, and then cooled to room temperature. The maximum temperature of the activation is below, preferably at least 20-100°C below, the sintering temperature of the intermediate from step a) or a'). This oxygen can also be carried out in the presence of suitable fluorinating agents, for example ammonium hexafluorosilicate.

The chromium-comprising precatalyst obtained in this way advantageously has a chromium content of from 0.1 to 5% by weight, in particular from 0.3 to 2% by weight.

The chromium-comprising precatalyst obtained in this way displays a short induction period in the polymerization of 1-alkenes.

The resulting chromium-comprising precatalyst to be used according to the invention can also be reduced in suspension or in the gas phase, for example by means of ethylene and/or α-olefins, carbon monoxide or triethylborane, or can be modified by silylation prior to being used in step c). The molar ratio of reducing agent to chromium is usually in the range from 0.05:1 to 500:1, preferably from 0.1:1 to 50:1, in particular from 0.5:1 to 5.0:1.

In suspension, the reduction temperature is generally in the range from 10 to 200°C, preferably in the range from 10 to 100°C, and the pressure is in the range from 0.1 to 500 bar, preferably in the range from 1 to 200 bar.

The reduction temperature in fluidized-bed processes is usually the range from 10 to 1000°C, preferably from 10 to 800°C, in particular from 10 to 600°C. In general, the gas-phase reduction is carried out in the pressure range from 0.1 to 500 bar, preferably in the range from 1 to 100 bar and in particular in the range from 5 to 20 bar.

In the gas-phase reduction, the chromium catalyst to be reduced is generally fluidized in a fluidized-bed reactor by means of an inert carrier gas stream, for example nitrogen or argon. The carrier gas stream is usually laden with the reducing agent, with liquid reducing agents preferably having a vapor pressure at STP of at least 1 mbar.

In step c), the chromium-comprising precatalyst is firstly prepolymerized with α-olefins, preferably linear C₂-C₁₀-1-alkenes and in particular with ethylene or mixtures of ethylene and C₂-C₁₀-1-alkenes. The mass ratio of the chromium-comprising precatalyst used in the prepolymerization to monomer polymerized onto it is usually in the range from 1:0.1 to 1:1000, preferably from 1:1 to 1:200. The prepolymerization can be carried out in suspension, in solution or in the gas phase, at a temperature of from 20 to 200°C and a pressure of from 0.5 to 50 bar, corresponding to 0.05 to 0.5 MPa.

The prepolymerization with the chromium-comprising precatalyst can be carried out in the presence of organometallic compounds of main groups one, two, three or four or of transition group two of the Periodic Table of the Elements. Well-suited compounds of this type are homoleptic C₁-C₁₀-alkyls of lithium, boron, aluminum or zinc, e.g. n-butyllithium, triethylboron, trimethylaluminum, triethylaluminum, triisobutylaluminum, tributylaluminum, trihexylaluminum, trioctylaluminum and diethylzinc. In addition, C₁-C₁₀-dialkylaluminum alkoxides such as diethylaluminum ethoxide are also well suited. It is also possible to use dimethylaluminum chloride, methylaluminum dichloride, methylaluminum sesquichloride or diethylaluminum chloride. Particular preference is given to n-butyllithium or trihexylaluminum as organometallic compound. Mixtures of the above-described organometallic compounds are generally also well suited. The molar ratio of organometallic compound:chromium is usually in the range from 0.1:1 to 50:1, preferably in the range from 1:1 to 50:1. However, since many of the activators, e.g. aluminum alkyls, are at the same time used for removing catalyst poisons (referred to as scavengers), the amount used depends on the contamination of the other starting materials. However, a person skilled in the art can determine the optimum amount by simple experimentation. The prepolymerization is particularly preferably carried out without further organometallic compounds.

After the prepolymerization is complete, the prepolymerized chromium-comprising precatalyst obtained in this way is preferably isolated and completely or partly freed of monomers and solvent still present.

The prepolymerized precatalyst obtained in this way can be completely dry or have a certain residual moisture content. However, the volatile constituents should make up not more than 20% by weight, in particular not more than 10% by weight, based on the prepolymerized chromium-comprising precatalyst. The prepolymerized chromium-comprising precatalyst obtained in this way advantageously has a chromium content of from 0.1 to 5% by weight, in particular from 0.3 to 2% by weight. The prepolymerized chromium-comprising precatalyst preferably has a polymer content of from 5 to 50% by weight, based on the prepolymerized chromium-comprising precatalyst, in particular from 10 to 30% by weight and particularly preferably from 15 to 25% by weight.

The prepolymerized chromium-comprising precatalyst is preferably a calcined CrO₃/SiO₂ catalyst which in the polymerization of ethylene or ethylene with C₂-C₁₀-1-alkenes gives polyethylene having a broad molar mass distribution (M_{w}/Mₙ in the range from 7 to 50, preferably from 8 to 30), with the molar mass of the polyethylene not being influenced, or being influenced only to a small extent, by addition of hydrogen. Preference is given to only small amounts of C₂-C₁₀-1-alkenes being incorporated, preferably less than 2% by weight, in particular less than 1% by weight, based on the polyethylene obtained in this way.

The prepolymerized chromium compound is then used as support material for the metallocene compound.

Particularly suitable metallocene compounds are complexes of the general formula (I) 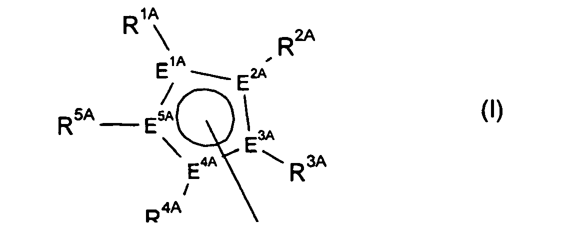 where the substituents and indices have the following meanings:
- M^{1A}: is titanium, zirconium, hafnium, vanadium, niobium, tantalum, chromium, molybdenum or tungsten, or an element of group 3 of the Periodic Table and the lanthanides,
- X^{A}: is fluorine, chlorine, bromine, iodine, hydrogen, C₁-C₁₀-alkyl, 5- to 7-membered cycloalkyl or cycloalkenyl, C₂-C₁₀alkenyl, C₆-C₂₂-aryl, alkylaryl having from 1 to 10 carbon atoms in the alkyl radical and from 6 to 20 carbon atoms in the aryl radical, -OR^{6A} or -NR^{6A}R^{7A}, or two radicals X^{A} for a substituted or unsubstituted diene ligand, in particular a 1,3-diene ligand, and the radicals X^{A} are identical or different and may be joined to one another, or X^{A} is a ligand of the following group: 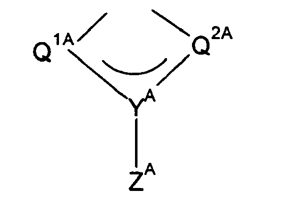 where

- Q^{1A}-Q^{2A}: are each O, NR^{6A}, CR^{6A}R^{7A} or S, and Q^{1A} and Q^{2A} are bound to M^{1A},
- Y^{A}: is C or S and
- Z^{A}: is OR^{6A}, SR^{6A}, NR^{6A}R^{7A}, PR^{6A}R^{7A} , hydrogen, C₁-C₁₀-alkyl, 5- to 7-membered cycloalkyl or cycloalkenyl, C₂-C₁₀alkenyl, C₆-C₂₂-aryl, alkylaryl having from 1 to 10 carbon atoms in the alkyl radical and from 6 to 20 carbon atoms in the aryl radical or SiR^{8A}₃,
- E^{1A}-E^{5A}: are each carbon or not more than one E^{1A} to E^{5A} is phosphorus or nitrogen, preferably carbon,
- t: is 1, 2 or 3, with t being, depending on the valence of M^{1A}, such that the complex of the general formula (I) is uncharged,
where
- R^{1A} to R^{5A}: are each, independently of one another, hydrogen, C₁-C₂₂-alkyl, 5- to 7-membered cycloalkyl or cycloalkenyl which may in turn bear C₁-C₁₀-alkyl groups as substituents, C₂-C₂₂-alkenyl, C₆-C₂₂-aryl, arylalkyl having from 1 to 16 carbon atoms in the alkyl radical and from 6 to 21 carbon atoms in the aryl radical, NR^{8A}₂, N(SiR^{8A}₃)₂, OR^{8A}, OSiR^{8A}₃, SiR^{8A}₃, where the organic radicals R^{1A}-R^{5A} may also be substituted by halogens and/or two radicals R^{1A}-R^{5A}, in particular vicinal radicals, may also be joined to form a five-, six- or seven-membered ring; and/or two vicinal radicals R^{1A}-R^{5A} may be joined to form a five-, six- or seven-membered heterocycle which comprises at least one atom from the group consisting of N, P, O and S,
- R^{6A} and R^{7A}: are each, independently of one another, C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical, where the organic radicals R^{6A} and R^{7A} may also be substituted by halogens and/or two radicals R^{6A} and R^{7A} may also be joined to form a five-, six- or seven-membered ring, or SiR^{8A} and
- R^{8A}: can be identical or different and can each be C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical, C₁-C₁₀-alkoxy or C₆-C₁₀-aryloxy, where the organic radicals R^{8A} may also be substituted by halogens and/or two radicals R^{8A} may also be joined to form a five-, six- or seven-membered ring, and
- Z^{1A}: is X^{A} or 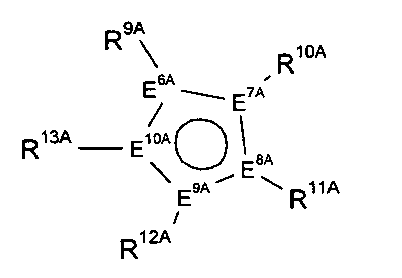
where the radicals
- R^{9A} to R^{13A}: are each, independently of one another, hydrogen, C₁-C₂₂-alkyl, 5- to 7-membered cycloalkyl or cycloalkenyl which may in turn bear C₁-C10-alkyl groups as substituents, C₂-C₂₂-alkenyl, C₆-C₂₂-aryl, arylalkyl having from 1 to 16 carbon atoms in the alkyl radical and 6-21 carbon atoms in the aryl radical, R^{14A} -C(O)O, R^{14A} -C(O)NR^{14A}, NR^{14A}₂, N(SiR^{14A}₃)₂ OR^{14A}, OSiR^{14A}₃, SiR^{14A}3, where the organic radicals R^{9A}-R^{13A} may also be substituted by halogens and/or two radicals R^{9A}-R^{13A}, in particular vicinal radicals, may also be joined to form a five-, six- or seven- membered ring, and/or two vicinal radicals R^{9A}-R^{13A} may be joined to form a five-,
- R^{14A}: six- or seven-membered heterocycle which comprises at least one atom from the group consisting of N, P, O and S, where are identical or different and are each C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical, C₁-C₁₀- alkoxy or C₆-C₁₀-aryloxy, where the organic radicals R^{14A} may also be substituted by halogens and/or two radicals R^{14A} may also be joined to form a five-, six- or seven-membered ring, and
- E^{6A}-E^{10A}: are each carbon or not more than one E^{6A} to E^{10A} is phosphorus or nitrogen, preferably carbon,
or the radicals R^{4A} and Z^{1A} together form a -R^{15A}ᵥ-A^{1A}- group, where
- R^{15A}: is 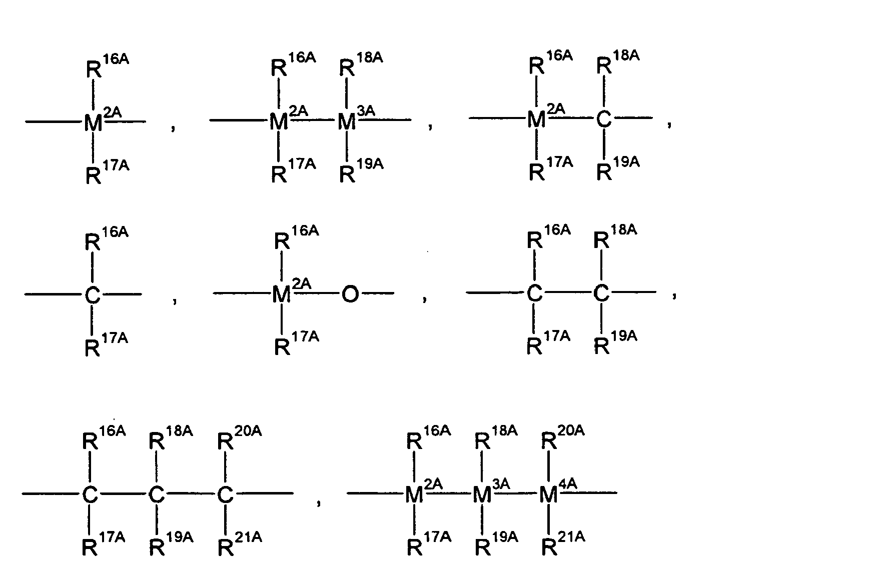
BR¹⁶A,= BNR^{16A}R^{17A}, = AIR^{16A,} -Ge-, -Sn-, -O-, -S-, = SO, = SO₂, = NR^{16A}, = CO, = PR^{16A} or = P(O)R^{16A},
where
- R^{16A}-R^{21A}: are identical or different and are each a hydrogen atom, a halogen atom, a trimethylsilyl group, C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical, C₁-C₁₀alkoxy or C₆-C₁₀-aryloxy, where the organic radicals R^{16A}-R^{21A} may also be substituted
- M^{2A}-M^{4A}: by halogens and/or two radicals R^{16A}-R^{21A} may also be joined to form a five-, six- or seven-membered ring, and are each silicon, germanium or tin, preferably silicon
- A^{1A}: —O—,—S—, 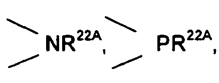 =O =S, =NR^{22A} ,- O - R^{22A}, -NR^{22A}2, - PR^{22A}2 or an unsubstituted, substituted or fused, heterocyclic ring system, where
- R^{22A}: are each, independently of one another, C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical or Si(R^{23A})₃, where the organic radicals R^{22A} may also be substituted by halogens and/or two radicals R^{22A} may also be joined to form a five-, six- or seven-membered ring,
- R^{23A}: is hydrogen, C₁-C₁₀-alkyl, 5- to 7-membered cycloalkyl or cycloalkenyl, C₂-C₂₂- alkenyl, C₆-C₂₂-aryl, alkylaryl having from 1 to 10 carbon atoms in the alkyl radical and from 6 to 20 carbon atoms in the aryl radical, where the organic radicals R^{23A} may also be substituted by halogens and/or two radicals R^{23A} may also be joined to form a five-, six- or seven-membered ring,
- v: is 1 or when A^{1A} is an unsubstituted, substituted or fused, heterocyclic ring system can also be 0,
or the radicals R^{4A} and R^{12A} together form a -R^{15A} - group.

The synthesis of such metal complexes can be carried out by methods known per se, with preference being given to the reaction of the appropriately substituted, cyclic hydrocarbon anions with halides of titanium, zirconium, hafnium or chromium.

For the purposes of the present invention, the term alkyl refers to a linear or branched alkyl such as methyl, ethyl, n-propyl, isopropyl, n-butyl, isobutyl, tert-butyl, n-pentyl, n-hexyl, n-heptyl, n-octyl, n-nonyl or n-decyl. The term alkenyl refers to a linear or branched alkenyl in which the double bond can be internal or terminal, e.g. vinyl, 1-allyl, 2-allyl, 3-allyl, 1-butenyl, 2-butenyl, 1-pentenyl or 1-hexenyl. The term C₆-C₂₂-aryl refers to an unsubstituted, substituted or fused aryl system, with the aryl radical being able to be substituted by further alkyl groups, e.g. phenyl, naphthyl, biphenyl, anthranyl, o-, m-, p-methylphenyl, 2,3-, 2,4-, 2,5- or 2,6-dimethylphenyl, 2,3,4-, 2,3,5-, 2,3,6-, 2,4,5-, 2,4,6- or 3,4,5-trimethylphenyl. The term arylalkyl refers to an aryl-substituted alkyl, with the arylalkyl being able to be substituted by further alkyl groups, e.g. benzyl, o-, m-, p-methylbenzyl, 1- or 2-ethylphenyl.

A^{1A} together with the bridge R^{15A} can, for example, form an amine, ether, thioether or phosphine. However, A^{1A} can also be an unsubstituted, substituted or fused, heterocyclic aromatic ring system which can comprise heteroatoms from the group consisting of oxygen, sulfur, nitrogen and phosphorus in addition to carbon ring atoms. Examples of 5-membered heteroaryl groups which may comprise from one to four nitrogen atoms and/or a sulfur or oxygen atom as ring atoms in addition to carbon atoms are 2-furyl, 2-thienyl, 2-pyrrolyl, 3-isoxazolyl, 5-isoxazolyl, 3-isothiazolyl, 5-isothiazolyl, 1-pyrazolyl, 3-pyrazolyl, 5-pyrazolyl, 2-oxazolyl, 4-oxazolyl, 5-oxazolyl, 2-thiazolyl, 4-thiazolyl, 5-thiazolyl, 2-imidazolyl, 4-imidazolyl, 5-imidazolyl, 1,2,4-oxadiazol-3-yl, 1,2,4-oxadiazol-5-yl, 1,3,4-oxadiazol-2-yl and 1,2,4-triazol-3-yl. Examples of 6-membered heteroaryl groups which can comprise from one to four nitrogen atoms and/or a phosphorus atom are 2-pyridinyl, 2-phosphabenzolyl, 3-pyridazinyl, 2-pyrimidinyl, 4-pyrimidinyl, 2-pyrazinyl, 1,3,5-triazin-2-yl and 1,2,4-triazin-3-yl, 1,2,4-triazin-5-yl and 1,2,4-triazin-6-yl. The five-membered and six-membered heteroaryl groups can also be substituted by C₁-C₁₀alkyl, C₆-C₁₀-aryl, alkylaryl having from 1 to 10 carbon atoms in the alkyl radical and 6-10 carbon atoms in the aryl radical, trialkylsilyl or halogens such as fluorine, chlorine or bromine or be fused with one or more aromatics or heteroaromatics. Examples of benzo-fused five-membered heteroaryl groups are 2-indolyl, 7-indolyl, 2-coumaronyl, 7-coumaronyl, 2-thianaphthenyl, 7-thianaphthenyl, 3-indazolyl, 7-indazolyl, 2-benzimidazolyl and 7-benzimidazolyl. Examples of benzo-fused six-membered heteroaryl groups are 2-quinolyl, 8-quinolyl, 3-cinnolyl, 8-cinnolyl, 1-phthalazyl, 2-quinazolyl, 4-quinazolyl, 8-quinazolyl, 5-quinoxalyl, 4-acridyl, 1-phenanthridyl and 1-phenazyl. Nomenclature and numbering of the heterocycles has been taken from L.Fieser and M. Fieser, Lehrbuch der organischen Chemie, 3rd revised edition, Verlag Chemie, Weinheim 1957.

The radicals X^{A} in the general formula (I) are preferably identical and are preferably fluorine, chlorine, bromine, C₁-C₇-alkyl or aralkyl, in particular chlorine, methyl or benzyl.

For the purposes of the present invention, this type of complexes of the formula (I) also includes compounds having at least one ligand formed by a cyclopentadienyl or heterocyclopentadienyl with a fused-on heterocycle, with the heterocycles preferably being aromatic and comprising nitrogen and/or sulfur. Such compounds are described, for example, in WO 98/22486. These are, in particular, dimethylsilanediyl(2-methyl-4-phenylindenyl)(2,5-dimethyl-N-phenyl-4-azapentalene)zirconium dichloride, dimethylsilanediylbis(2-methyl-4-phenyl-4-hydroazulenyl)zirconium dichloride, dimethylsilanediylbis(2-ethyl-4-phenyl-4-hydroazulenyl)zirconium dichloride, bis(2,5-dimethyl-N-phenyl-4-azapentalene)zirconium dichloride or (indenyl)(2,5-dimethyl-N-phenyl-4-azapentalene)zirconium dichloride.

Among the complexes of the general formula (I), preference is given to 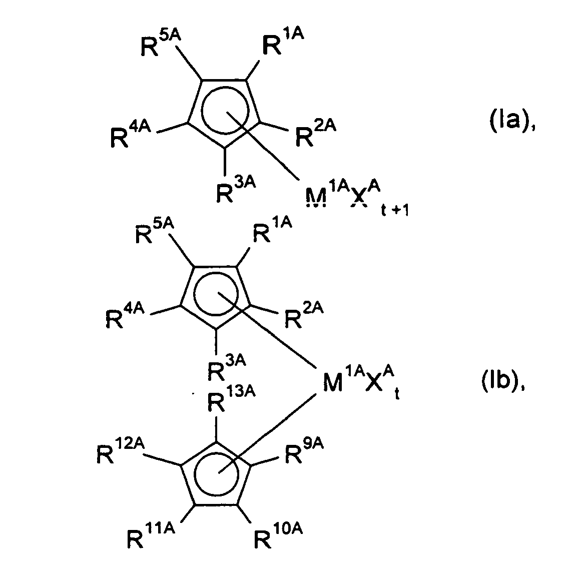 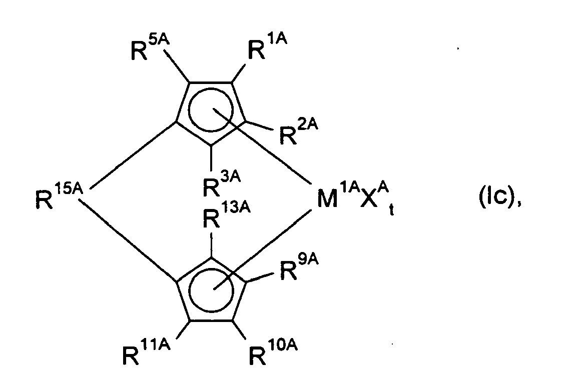 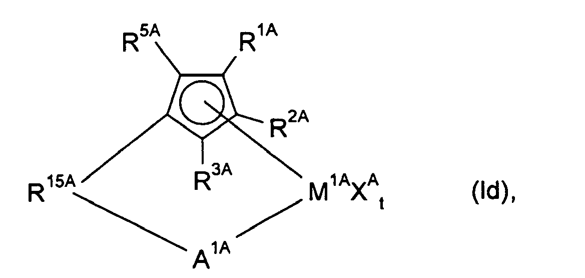 where the substituents and indices have the following meanings:
- M^{1A}: is titanium, zirconium, hafnium, vanadium, niobium, tantalum, chromium, molybdenum or tungsten, or an element of group 3 of the Periodic Table and the lanthanides,

- X^{A}: is fluorine, chlorine, bromine, iodine, hydrogen, C₁-C₁₀-alkyl, 5- to 7-membered cycloalkyl or cycloalkenyl, C₂-C₁₀alkenyl, C₆-C₂₂-aryl, alkylaryl having from 1 to 10 carbon atoms in the alkyl radical and from 6 to 20 carbon atoms in the aryl radical, -OR^{6A} or -NR^{6A}R^{7A}, or two radicals X^{A} for a substituted or unsubstituted diene ligand, in particular a 1,3-diene ligand, and the radicals X^{A} are identical or different and may be joined to one another, or X^{A} is a ligand of the following group: 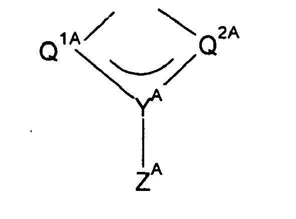
where
- Q^{1A}-Q^{2A}: are each O, NR^{6A}, CR^{6A}R^{7A} or S, and Q^{1A} and Q^{2A} are bound to M^{1A},
- Y^{A}: is C or S and
- Z^{A}: is OR^{6A}, SR^{6A}, NR^{6A}R^{7A}, PR^{6A}R^{7A}, hydrogen, C₁-C₁₀-alkyl, 5- to 7-membered cycloalkyl or cycloalkenyl, C₂-C₁₀-alkenyl, C₆-C₂₂-aryl, alkylaryl having from 1 to 10 carbon atoms in the alkyl radical and from 6 to 20 carbon atoms in the aryl radical or SiR^{8A}₃,
- E^{1A}-E^{5A}: are each carbon or not more than one E^{1A} to E^{5A} is phosphorus or nitrogen, preferably carbon,
- t: is 1, 2 or 3, with t being, depending on the valence of M^{1A}, such that the complex of the formula (la-d) is uncharged,
where
- R^{1A} bis R^{5A}: are each, independently of one another, hydrogen, C₁-C₂₂-alkyl, 5- to 7-membered cycloalkyl or cycloalkenyl which may in turn bear C₁-C₁₀-alkyl groups as substituents, C₂-C₂₂-alkenyl, C₆-C₂₂-aryl, arylalkyl having from 1 to 16 carbon atoms in the alkyl radical and from 6 to 21 carbon atoms in the aryl radical, NR^{8A}₂, N(SiR^{8A})₂, OR^{8A}, OSiR^{8A}₃, SiR^{8A}₃, where the organic radicals R^{1A}-R^{5A} may also be substituted by halogens and/or two radicals R^{1A}-R^{5A}, in particular vicinal radicals, may also be joined to form a five-, six- or seven-membered ring, and/or two vicinal radicals R^{1A}-R^{5A} may be joined to form a five-, six- or seven-membered heterocycle which comprises at least one atom from the group consisting of N, P, O and S,

- R^{6A} und R^{7A}: are each, independently of one another, C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical, where the organic radicals R^{6A} and R^{7A} may also be substituted by halogens and/or two radicals R^{6A} and R^{7A} may also be joined to form a five-, six- or seven-membered ring, or SiR^{8A} and
- R^{8A}: can be identical or different and can each be C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical, C₁-C₁₀-alkoxy or C₆-C₁₀-aryloxy, where the organic radicals R^{8A} may also be substituted by halogens and/or two radicals R^{8A} may also be joined to form a five-, six- or seven-membered ring, and
- R^{9A} bis R^{13A}: are each, independently of one another, hydrogen, C₁-C₂₂-alkyl, 5- to 7-membered cycloalkyl or cycloalkenyl which may in turn bear C₁-C₁₀-alkyl groups as substituents, C₂-C₂₂-alkenyl, C₆-C₂₂-aryl, arylalkyl having from 1 to 16 carbon atoms in the alkyl radical and 6-21 carbon atoms in the aryl radical, R^{14A} -C(O)O, R^{14A} -C(O)NR^{14A}, NR^{14A}₂, N(SiR^{14A}₃)₂, OR^{14A} OSiR^{14A}₃, SiR^{14A}₃, where the organic radicals R^{9A}-R^{13A} may also be substituted by halogens and/or two radicals R^{9A}-R^{13A}, in particular vicinal radicals, may also be joined to form a five-, six- or seven- membered ring, and/or two vicinal radicals R^{9A}-R^{13A} may be joined to form a five-, six- or seven-membered heterocycle which comprises at least one atom from the group consisting of N, P, O and S, where
- R^{14A}: are identical or different and are each C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical, C₁-C₁₀- alkoxy or C₆-C₁₀-aryloxy, where the organic radicals R^{14A} may also be substituted by halogens and/or two radicals R^{14A} may also be joined to form a five-, six- or seven-membered ring, and
- E^{6A}-E^{10A}: are each carbon or not more than one E^{6A} to E^{10A} is phosphorus or nitrogen, preferably carbon,

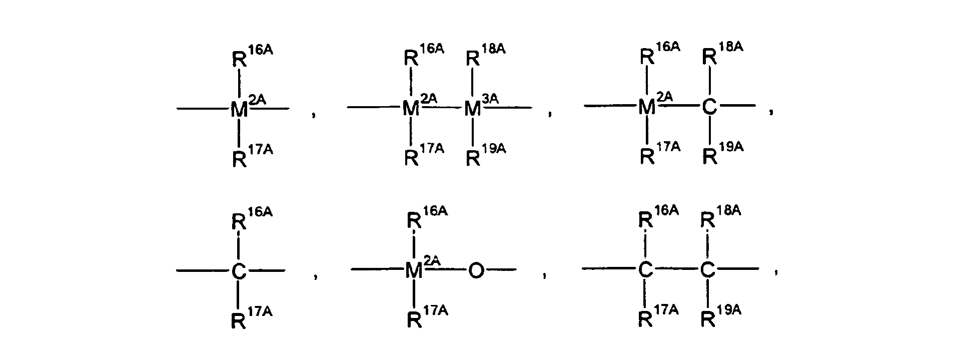

- R^{15A}: 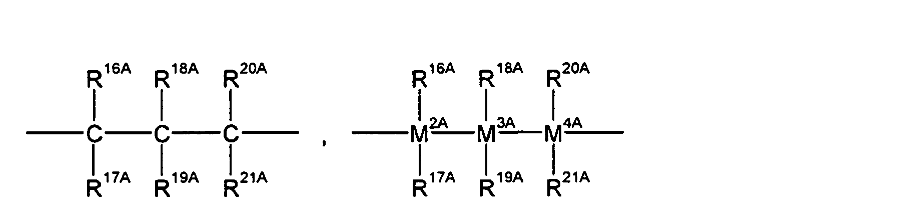
= BR^{16A},= BNR^{16A}R^{17A}, = AIR^{16A}, -Ge-, -Sn-, -O- -S-, = SO, = SO₂, = NR^{16A}, = CO, = PR^{16A} or = P(O)R^{16A}, where
- R^{16A}-R^{21A}: are identical or different and are each a hydrogen atom, a halogen atom, a trimethylsilyl group, C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical, C₁-C₁₀-alkoxy or C₆-C₁₀-aryloxy, where the organic radicals R^{16A}-R^{21A} may also be substituted by halogens and/or two radicals R^{16A}-R^{21A} may also be joined to form a five-, six- or seven-membered ring, and
- M^{2A}-M^{4A}: are each silicon, germanium or tin, preferably silicon
- A^{1A}: -O-,-S-, 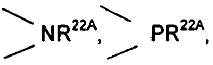 =O =S -NR^{22A}, -O -R^{22A}, - NR^{22A}₂ ,- PR^{22A}₂ or an unsubstituted, substituted or fused, heterocyclic ring system, where
- R^{22A}: are each, independently of one another, C₁-C₁₀-alkyl, 5- to 7-membered cycloalkyl or cycloalkenyl, C₂-C₂₂-alkenyl, C₆-C₂₂-aryl, alkylaryl having from 1 to 10 carbon atoms in the alkyl radical and from 6 to 20 carbon atoms in the aryl radical or Si(R^{23A})₃, where the organic radicals R^{22A} may also be substituted by halogens and/or two radicals R^{22A} may also be joined to form a five-, six- or seven-membered ring,
- R^{23A}: is hydrogen, C₁-C₁₀-alkyl, 5- to 7-membered cycloalkyl or cycloalkenyl, C₂-C₂₂- alkenyl, C₆-C₂₂-aryl, alkylaryl having from 1 to 10 carbon atoms in the alkyl radical and from 6 to 20 carbon atoms in the aryl radical, where the organic radicals R^{23A} may also be substituted by halogens and/or two radicals R^{23A} may also be joined to form a five-, six- or seven-membered ring,
- v: is 1 or when A^{1A} is an unsubstituted, substituted or fused, heterocyclic ring system can also be 0.

Particularly suitable complexes are unbridged metallocene complexes (B) of the general formula (II) 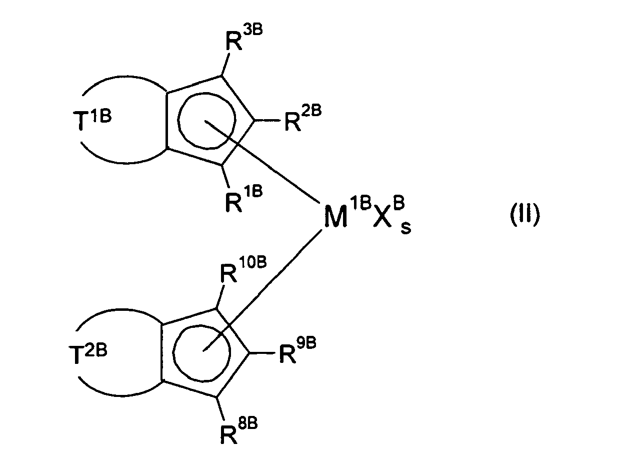 where the substituents and indices have the following meanings:
- M^{1B}: is a metal of group 4 of the Periodic Table of the Elements, in particular Zr, 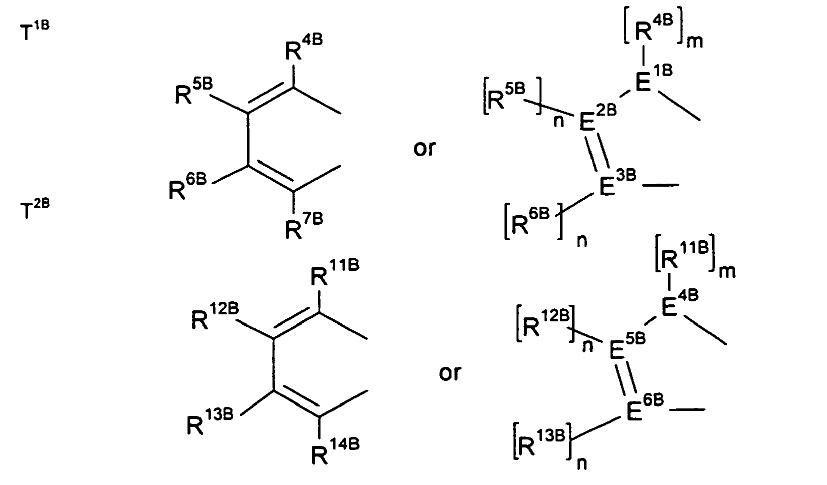
- E^{1B},E^{4B}: are each, independently of one another, nitrogen, phosphorus, oxygen or sulfur,
- m: is 0 when E^{1B} or E^{4B} is oxygen or sulfur and is 1 when E^{1B} or E^{4B} is nitrogen or phosphorus,
- E^{2B},E^{3B},E^{5B},E^{6B}: are each, independently of one another, carbon, nitrogen or phosphorus,
- n: is 0 when E^{2B},E^{3B},E^{5B} or E^{6B} is nitrogen or phosphorus and is 1 when E^{1B} or E^{4B} is carbon,
- R^{1B} to R^{14B}: are each, independently of one another, hydrogen, C₁-C₂₂-alkyl, C₂-C₂₂-alkenyl, C₆- C₂₂-aryl, arylalkyl having from 1 to 16 carbon atoms in the alkyl radical and from 6 to 21 carbon atoms in the aryl radical, NR^{15B}₂, N(SiR^{15B}₃)₂, OR^{15B}, OSiR^{15B}₃, SiR^{15B}₃, where the organic radicals R^{1B}-R^{14B} may also be substituted by halogens and/or two adjacent radicals R^{1B}-R^{14BB} may also be joined to form a five-, six- or seven-membered ring, and/or two adjacent radicals R^{1B}-R^{14B} may be joined to form a five-, six- or seven-membered heterocycle which comprises at least one atom from the group consisting of N, P, O and S, where
- R^{15B}: are identical or different and are each C₁-C₂₀-alkyl, C₆-C₁₅-aryl, arylalkyl having from 1 to 16 carbon atoms in the alkyl radical and from 6 to 21 carbon atoms in the aryl radical, and
- X^{B}: is fluorine, chlorine, bromine, iodine, hydrogen, C₁-C₁₀-alkyl, C₂-C₁₀-alkenyl, C₆-C₁₅- aryl, arylalkyl having from 1 to 10 carbon atoms in the alkyl radical and from 6 to 20 carbon atoms in the aryl radical, -OR¹⁶B or -NR^{16B}R^{17B}, -OC(O)R^{16A}, -O₃SR^{16B}, R^{16B}C(O)-CH-CO-R^{17B}, CO or two radicals X^{B} form a substituted or unsubstituted diene ligand, in particular a 1,3- diene ligand, and the radicals X^{B} are identical or different and may be joined to one another,
- s: is 1 or 2, with s being, depending on the valence of M^{1B}, such that the metallocene complex of the general formula (II) is uncharged,
where
- R^{16B} and R^{17B}: are each C₁-C₁₀-alkyl, C₆-C₁₅-aryl, arylalkyl, fluoroalkyl or fluoroaryl each having from 1 to 10 carbon atoms in the alkyl radical and from 6 to 20 carbon atoms in the aryl radical.

The chemical structure of the substituents R^{1B} to R^{14B} can be varied within a wide range. Possible carboorganic substituents are, for example, the following: hydrogen, C₁-C₂₂-alkyl which may be linear, cyclic or branched, e.g. methyl, ethyl, n-orooyl; isopropyl, n-buty, isobutyl, tert-butyl, n-pentyl, n-hexyl, n-heptyl, n-octyl, n-nonyl, n-decyl or n-dodecyl, 3- to 12-membered cycloalkyl which may in turn bear a C₁-C₁₀alkyl group as substituent, e.g. cyclopropane, cyclobutane, cyclopentane, cyclohexane, cycloheptane, cyclooctane, cyclononane or cyclododecane, C₂-C₂₂-alkenyl which may be linear, cyclic or branched and in which the double bond may be internal or terminal, e.g. vinyl, 1-allyl, 2-allyl, 3-allyl, butenyl, pentenyl, hexenyl, cyclopentenyl, cyclohexenyl, cyclooctenyl or cyclooctadienyl, C₆-C₂₂-aryl which may be substituted by further alkyl groups, e.g. phenyl, naphthyl, biphenyl, anthranyl, o-, m-, p-methylphenyl, 2,3-, 2,4-, 2,5- or 2,6-dimethylphenyl, 2,3,4-, 2,3,5-, 2,3,6-, 2,4,5-, 2,4,6- or 3,4,5-trimethylphenyl, or an aryl-substituted alkyl radical arylalkyl which may be substituted by further alkyl groups, e.g. benzyl, o-, m-, p-methylbenzyl, 1- or 2-ethylphenyl, where two adjacent radicals R^{1B} to R^{14B} may also be joined to form a 5-, 6- or 7-membered ring and/or two of the adjacent radicals R^{1B} to R^{14B} may be joined to form a five-, six- or seven-membered heterocycle which comprises at least one atom from the group consisting of N, P, O and S and/or the organic radicals R^{1B} to R^{14B} may also be substituted by halogens such as fluorine, chlorine or bromine. Furthermore, R^{1B} to R^{14B} can be amino NR^{15B}₂ or N(SiR^{15B}₃)₂, alkoxy or aryloxy OR^{15B}, for example dimethylamino, N-ethylmethylamino, diethylamino, N-methylpropylamino, N-methylisopropylamino, N-ethylisopropylamino, dipropylamino, diisopropylamino, N-methylbutylamino, N-ethylbutylamino, N-methyltert-butylamino, dibutylamino, di-sec-butylamino, diisobutylamino, N-methylhexylamino, dihexylamino, N-methylcyclohexylamino, N-ethylcyclohexylamino, N-isopropylcyclohexylamino, dicyclohexylamino, N-pyrrolidinyl, piperidinyl, decahydroquinolino, diphenylamino, N-methylaniline or N-ethylaniline, methoxy, ethoxy or isopropoxy. Possible radicals R^{15B} in organosilicon substituents SiR^{15B}₃ are the same carboorganic radicals as mentioned above for R^{1B} to R^{14B}, with radicals R^{15B} also being able to be joined to form a 5- or 6-membered ring, e.g. trimethylsilyl, triethylsilyl, butyldimethylsilyl, tributylsilyl, tri-tert-butylsilyl, triallylsilyl, triphenylsilyl or dimethylphenylsilyl. The radicals SiR^{15B}₃ can also be joined to the cyclopentadienyl skeleton via an oxygen or nitrogen atom, for example trimethylsilyloxy, triethylsilyloxy, butyldimethylsilyloxy, tributylsilyloxy or tri-tert-butylsilyloxy.

Two adjacent radicals R^{1B} to R^{14B} can, in each case together with the carbon atoms bearing them, form a heterocycle, preferably a heteroaromatic, which comprises at least one atom from the group consisting of nitrogen, phosphorus, oxygen and sulfur, particularly preferably nitrogen and/or sulfur. Preference is given to heterocycles and heteroaromatics having a ring size of 5 or 6 ring atoms. Examples of 5-membered heterocycles which can comprise from one to four nitrogen atoms and/or a sulfur or oxygen atom as ring atoms in addition to carbon atoms are 1,2-dihydrofuran, furan, thiophene, pyrrole, isoxazole, 3-isothiazole, pyrazole, oxazole, thiazole, imidazole, 1,2,4-oxadiazole, 1,2,5-oxadiazole, 1,3,4-oxadiazole, 1,2,3-triazole and 1,2,4-triazole. Examples of 6-membered heteroaryl groups which can comprise from one to four nitrogen atoms and/or a phosphorus atom are pyridine, phosphabenzene, pyridazine, pyrimidine, pyrazine, 1,3,5-triazine, 1,2,4-triazine and 1,2,3-triazine. The 5-membered and 6-membered heterocycles may also be substituted by C₁-C₁₀-alkyl, C₆-C₁₀-aryl, arylalkyl having from 1 to 10 carbon atoms in the alkyl radical and 6-10 carbon atoms in the aryl radical, trialkylsilyl or halogens such as fluorine, chlorine or bromine, dialkylamide, alkylarylamide, diarylamide, alkoxy or aryloxy or be fused with one or more aromatics or heteroaromatics. Examples of benzo-fused five-membered heteroaryl groups are indole, indazole, benzofuran, benzothiophene, benzothiazole, benzoxazole and benzimidazole. Examples of benzo-fused 6-membered heteroaryl groups are chromane, benzoypyran, quinoline, isoquinoline, cinnoline, phthalazine, quinazoline, quinoxaline, 1,10-phenanthroline and quinolizine. Nomenclature and numbering of the heterocycles has been taken from Lettau, Chemie der Heterocyclen, 1 st edition, VEB, Weinheim 1979. The heterocycles/heteroaromatics are preferably fused to the cyclopentadienyl skeleton via a C-C double bond of the heterocycle/heteroaromatic. The heterocycles/heteroaromatics having a heteroatom are preferably 2,3- or b-fused.

T^{1B} and T^{2B} each form, together with the cyclopentadienyl system, a fused heteroaromatic 5-membered ring or a fused aromatic 6-membered ring. E^{1B} can be located on the carbon atom adjacent to the carbon atom bearing R^{3B} or R^{1B}. E^{4B} can be located on the carbon atom adjacent to the carbon atom bearing R^{8B} or R^{10B}. E^{1B} and E^{4B} are preferably sulfur or nitrogen. E^{2B}, E^{3B}, E^{5B} and E^{6B} are preferably carbon. Preferred systems (together with the cyclopentadienyl system) are, for example, thiapentalene, 2-methylthiapentalene, 2-ethylthiapentalene, 2-isopropylthia-pentalene, 2-n-butylthiapentalene, 2-tert-butylthiapentalene, 2-trimethylsilylthiapentalene, 2-phenylthiapentalene, 2-naphthylthiapentalene, 3-methylthiapentalene, 4-phenyl-2,6-dimethyl-1-thiopentalene, 4-phenyl-2,6-diethyl-1-thiapentalene, 4-phenyl-2,6-diisopropyl-1-thiapentalene, 4-phenyl-2,6-di-n-butyl-1-thiapentalene, 4-phenyl-2,6-di-trimethylsilyl-1-thiapentalene, azapentalene, 1-methylazapentalene, 1-ethylazapentalene, 1-isopropylazapentalene, 1-n-butylazapentalene, 1-trimethylsilylazapentalene, 1-phenylazapentalene, 1-naphthylazapentalene, 1-phenyl-2,5-dimethyl-1-azapentalene, 1-phenyl-2,5-diethyl-1-azapentalene, 1-phenyl-2,5-di-n-butyl-1-azapentalene, 1-phenyl-2,5-di-tert-butyl-1-azapentalene, 1-phenyl-2,5-di-trimethylsilyl-1-azapentalene, 1-tert-butyl-2,5-dimethyl-1-azapentalene, oxapentalene, phosphapentalene, 1-phenyl-2,5-dimethyl-1-phosphapentalene, 1-phenyl-2,5-diethyl-1-phosphapentalene, 1-phenyl-2,5-di-n-butyl-1-phosphapentalene, 1-phenyl-2,5-di-tert-butyl-1-phosphapentalene, 1-phenyl-2,5-di-trimethylsilyl-1-phosphapentalene, 1-methyl-2,5-dimethyl-1-phosphapentalene, -1-tert-butyl-2,5-dimethyl-1-phosphapentalene, 7-cyclopenta[1,2]thiopheno[3,4]cyclopentadienes or 7-cyclopenta[1,2]pyrrolo[3,4]cyclopentadienes. The synthesis of such cyclopentadienyl systems having a fused-on heterocycle is described, for example, in WO 98/22486. In "Metalorganic catalysts for synthesis and polymerisation" , Springer Verlag 1999, p. 150 ff, Ewen et al. describe further syntheses of these cyclopentadienyl systems.

T^{1B} and T^{2B} are preferably the diene structures depicted above and, together with the cyclopentadienyl skeleton bearing them, preferably form a substituted or unsubstituted indenyl system such as indenyl, 2-methylindenyl, 2-ethylindenyl, 2-isopropylindenyl, 3-methylindenyl, benzindenyl or 2-methylbenzindenyl. The fused ring system can bear further C₁-C₂₀-alkyl, C₂-C₂₀-alkenyl, C₆-C₂₀-aryl, arylalkyl having from 1 to 10 carbon atoms in the alkyl radical and 6-20 carbon atoms in the aryl radical, NR^{15B}₂, N(SiR^{15B}₃)₂, OR^{15B}, OSiR^{15B}₃ or SiR^{15B}₃ groups, e.g. 4-methylindenyl, 4-ethylindenyl, 4-isopropylindenyl, 5-methylindenyl, 4-phenylindenyl, 5-methyl-4-phenylindenyl, 2-methyl-4-phenylindenyl or 4-naphthylindenyl.

The ligands X^{B} are determined, for example, by the choice of the corresponding metal starting compounds which are used for the synthesis of the metallocene complexes (B), but can also be varied afterwards. Possible ligands X^{B} are, in particular, the halogens such as fluorine, chlorine, bromine or iodine, in particular chlorine. Alkyl radicals such as methyl, ethyl, propyl, butyl, vinyl, allyl, phenol or benzyl are also advantageous ligands X^{B}. As further ligands X^{B}, mention may be made, purely by way of example and in no way exhaustively, of trifluoroacetate, BF₄⁻, PF₆⁻ and weakly coordinating or noncoordinating anions (cf., for example, S. Strauss in Chem. Rev. 1993, 93, 927-942), e.g. B(C₆F₅)₄⁻.

Amides, alkoxides, sulfonates, carboxylates and β-diketonates are also particularly useful ligands X^{B}. Variation of the radicals R^{16B} and R^{17B} allows, for example, fine adjustments to be made in physical properties such as solubility. Possible carboorganic substituents R^{16B} and R^{17B} are, for example, the following: C₁-C₂₀-alkyl which may be linear or branched, e.g. methyl, ethyl, n-propyl, isopropyl, n-butyl, isobutyl, tert-butyl, n-pentyl, n-hexyl, n-heptyl, n-octyl, n-nonyl, n-decyl or n-dodecyl, 3- to 12-membered cycloalkyl which may in turn bear a C₆-C₁₀-aryl group as substituent, e.g. cyclopropane, cyclobutane, cyclopentane, cyclohexane, cycloheptane, cyclooctane, cyclononane or cyclododecane, C₂-C₂₀-alkenyl which may be linear, cyclic or branched and in which the double bond can be internal or terminal, e.g. vinyl, 1-allyl, 2-allyl, 3-allyl, butenyl, pentenyl, hexenyl, cyclopentenyl, cyclohexenyl, cyclooctenyl or cyclooctadienyl, C₆-C₂₀-aryl which may be substituted by further alkyl groups and/or N- or O-comprising radicals, e.g. phenyl, naphthyl, biphenyl, anthranyl, o-, m-, p-methylphenyl, 2,3-, 2,4-, 2,5- or 2,6-dimethylphenyl, 2,3,4-, 2,3,5-, 2,3,6-, 2,4,5-, 2,4,6- or 3,4,5-trimethylphenyl, 2-methoxyphenyl, 2-N,N-dimethylaminophenyl, or arylalkyl which may be substituted by further alkyl groups, e.g. benzyl, o-, m-, p-methylbenzyl, 1- or 2-ethylphenyl, where R^{16B} may also be joined to R^{17B} to form a 5- or 6-membered ring and the organic radicals R^{16B} and R^{17B} may also be substituted by halogens such as fluorine, chlorine or bromine. Some of the substituted ligands X^{B} are particularly preferably used since they are obtainable from cheap and readily available starting materials. Thus, a particularly preferred embodiment is when X^{B} is dimethylamide, methoxide, ethoxide, isopropoxide, phenoxide, naphthoxide, triflate, p-toluenesulfonate, acetate or acetylacetonate.

The number s of the ligands X^{B} depends on the oxidation state of the transition metal M^{B}. The index s can thus not be given in general terms. The oxidation state of the transition metal M^{B} in catalytically active complexes is usually known to those skilled in the art. Zirconium and hafnium are very probably present in the oxidation state +4. However, it is also possible to use complexes whose oxidation state does not correspond to that of the active catalyst. Such complexes can then be appropriately oxidized by means of suitable activators. Preference is given to zirconium complexes in the oxidation state +4.

The radicals X^{B} are preferably fluorine, chlorine, bromine, C₁-C₇-alkyl or benzyl, in particular chlorine.

The metallocene complexes can also be chiral. Thus, the meso or racemic form or mixtures of the two forms can be used (with regard to the conventions pertaining to chirality in cyclopentadienyl compounds, see R. Halterman, Chem. Rev. 92, (1992), 965-994). Preference is given to metallocenes in the racemic form or in a form enriched with racemate.

The synthesis of such complexes can be carried out by methods known per se, with the reaction of the appropriately substituted, cyclic hydrocarbon anions with halides of zirconium being particularly preferred. Examples of appropriate preparative methods are described, inter alia, in Journal of Organometallic Chemistry, 369 (1989), 359-370.

The zirconocenes of the formula (II) in which the cyclopentadienyl radicals are identical are particularly useful.

Further examples of particularly suitable catalysts (B) are, inter alia, bis(indenyl)titanium dichloride, bis(fluorenyl)titanium dichloride, bis(indenyl)zirconium dichloride, bis(2-methylindenyl)zirconium dichloride, bis(2-ethylindenyl)zirconium dichloride, bis(2-isopropylindenyl)zirconium dichloride, bis(2-tert-butylindenyl)zirconium dichloride, bis(2-methylindenyl)zirconium dibromide, bis(2-methyl-4,5-benzindenyl)zirconium dichloride, bis(2-methyl-4-phenylindenyl)zirconium dichloride, bis(2-methyl-4-(1-naphthyl)indenyl)zirconium dichloride, bis(2-ethyl-4-(1-naphthyl)indenyl)zirconium dichloride, bis(2-propyl-4-(1-naphthyl)indenyl)zirconium dichloride, bis(2-isobutyl-4-(1-naphthyl)indenyl)zirconium dichloride, bis(2-propyl-4-(9-phenanthryl)indenyl)zirconium dichloride, bis(2-methyl-4-isopropylindenyl)zirconium dichloride, bis(2,7-dimethyl-4-isopropylindenyl)zirconium dichloride, bis(2-methyl-4,6-diisopropyl-indenyl)zirconium dichloride, bis(2-methyl-4[p-trifluoromethylphenyl]indenyl)zirconium dichloride, bis(2-methyl-4-[3',5'-dimethylphenyl]indenyl)zirconium dichloride, bis(2-methyl-4-[4'-tert-butylphenyl]indenyl)zirconium dichloride, bis(2-ethyl-4-[4'-tert-butylphenyl]indenyl)zirconium dichloride, bis(2-propyl-4-[4'-tert-butylphenyl]indenyl)zirconium dichloride, bis(2-isopropyl-4-[4'-tert-butylphenyl]indenyl)zirconium dichloride, bis(2-n-butyl-4-[4'-tert-butylphenyl]indenyl)zirconium dichloride, bis(2-hexyl-4-[4'-tert-butylphenyl]indenyl)zirconium dichloride, (2-isopropyl-4-phenylindenyl)(2-methyl-4-phenylindenyl)zirconium dichloride, (2-isopropyl-4-(1-naphthyl)indenyl)(2-methyl-4-(1-naphthyl)indenyl)zirconium dichloride, (2-isopropyl-4-[4'-tert-butylphenyl]indenyl)(2-methyl-4-[1'-naphthyl]indenyl)zirconium dichloride, and also the corresponding dimethylzirconium, monochloromono(alkylaryloxy)zirconium and di(alkylaryloxy)zirconium compounds. Further examples are the corresponding zirconocene compounds in which one or both of the chloride ligands have been replaced by bromide or iodide.

The weight ratio of transition metal from the metallocene compound to chromium from the chromium compound of the prepolymerized precatalyst in the mixed catalyst is usually in the range from 1:1 to 1:10, preferably from 1:1.1 to 1:5 and particularly preferably from 1:1.2 to 1:2.

The mixed catalyst can be completely dry or have a certain residual moisture content. However, the volatile constituents should make up not more than 30% by weight, in particular not more than 10% by weight, based on the mixed catalyst. The prepolymerized chromium-comprising precatalyst preferably has a polymer content of from 5 to 50% by weight, based on the mixed catalyst, in particular from 10 to 30% by weight and particularly preferably from 15 to 25% by weight.

When used as sole catalyst under the same reaction conditions in the homopolymerization of ethylene, the metallocene compound preferably produces a higher M_{w} than the prepolymerized precatalyst when the latter is used as sole catalyst under the same reaction conditions.

Some of the metallocene compounds have little polymerization activity on their own and are then brought into contact with one or more activators, viz. the component (C), in order to be able to display good polymerization activity. The mixed catalyst system therefore optionally comprises one or more activating compounds as component (C), preferably one or two activating compounds (C). Depending on the catalyst combinations, one or more activating compounds (C) are advantageous. The mixed catalyst of the invention preferably comprises one activating compound (C).

The activator or activators (C) can in each case be used in any amounts based on the metallocene compound of the mixed catalyst composition of the invention, but they are preferably used in excess or in stoichiometric amounts, in each case based on the metallocene compound which they activate. The amount of activating compound(s) to be used depends on the type of activator (C). In general, the molar ratio of the metallocene compound to the activating compound (C) can be from 1:0.1 to 1:10 000, preferably from 1:1 to 1:2000.

Suitable compounds (C) which are able to react with the metallocene compound to convert it into a catalytically active, or more active, compound are, for example, compounds such as an aluminoxane, a strong uncharged Lewis acid, an ionic compound having a Lewis-acid cation or an ionic compound having a Brönsted acid as cation.

As aluminoxanes, it is possible to use, for example, the compounds described in WO 00/31090. Particularly useful aluminoxanes are open-chain or cyclic aluminoxane compounds of the general formula (X) or (XI) 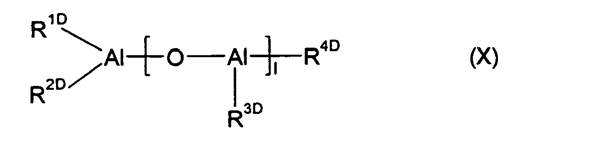 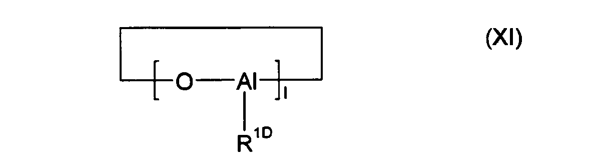 where R^{1D}-R^{4D} are each, independently of one another, a C₁-C₆-alkyl group, preferably a methyl, ethyl, butyl or isobutyl group, and I is an integer from 1 to 40, preferably from 4 to 25.

A particularly useful aluminoxane compound is methylaluminoxane.

These oligomeric aluminoxane compounds are usually prepared by controlled reaction of a solution of trialkylaluminum, in particular trimethylaluminum, with water. In general, the oligomeric aluminoxane compounds obtained in this way are in the form of mixtures of both linear and cyclic chain molecules of various lengths, so that I is to be regarded as a mean. The aluminoxane compounds can also be present in admixture with other metal alkyls, usually aluminum alkyls. Aluminoxane preparations suitable as component (C) are commercially available.

Furthermore, modified aluminoxanes in which some of the hydrocarbon radicals have been replaced by hydrogen atoms or alkoxy, aryloxy, siloxy or amide radicals can also be used as component (C) in place of the aluminoxane compounds of the general formulae (X) and (XI).

It has been found to be advantageous to use the metallocene compound and the aluminoxane compound in such amounts that the atomic ratio of aluminum from the aluminoxane compounds including any aluminum alkyl still present to the transition metal from the metallocene complex is in the range from 1:1 to 2000:1, preferably from 10:1 to 500:1 and in particular in the range from 20:1 to 400:1.

A further class of suitable activating components (C) are hydroxyaluminoxanes. These can be prepared, for example, by addition of from 0.5 to 1.2 equivalents of water, preferably from 0.8 to 1.2 equivalents of water, per equivalent of aluminum to an alkylaluminum compound, in particular triisobutylaluminum, at low temperatures, usually below 0°C. Such compounds and their use in olefin polymerization are described, for example, in WO 00/24787. The atomic ratio of aluminum from the hydroxyaluminoxane compound and the transition metal from the metallocene compound is usually in the range from 1:1 to 100:1, preferably from 10:1 to 50:1 and in particular in the range from 20:1 to 40:1. Preference is given to a metallocene dialkyl compound.

As strong, uncharged Lewis acids, preference is given to compounds of the general formula (XII)

M^{2D}X^{1D}X^{2D}X^{3D} (XII)

where
- M^{2D}: is an element of group 13 of the Periodic Table of the Elements, in particular B, Al or Ga, preferably B,
- X^{1D}, X^{2D} and X^{3D}: are each hydrogen, C₁-C₁₀-alkyl, C₆-C₁₅-aryl, alkylaryl, arylalkyl, haloalkyl or haloaryl each having from 1 to 10 carbon atoms in the alkyl radical and from 6 to 20 carbon atoms in the aryl radical or fluorine, chlorine, bromine or iodine, in particular haloaryls, preferably pentafluorophenyl.

Further examples of strong, uncharged Lewis acids are given in WO 00/31090.

Compounds of this type which are particularly useful as component (C) are boranes and boroxins such as trialkylborane, triarylborane or trimethylboroxin. Particular preference is given to boranes which bear at least two perfluorinated aryl radicals. Particular preference is given to compounds of the general formula (XII) in which X^{1D}, X^{2D} and X^{3D} are identical, for example triphenylborane, tris(4-fluorophenyl)borane, tris(3,5-difluorophenyl)borane, tris(4-fluoromethylphenyl)borane, tris(pentafluorophenyl)borane, tris(tolyl)borane, tris(3,5-dimethylphenyl)borane, tris(3,5-difluorophenyl)borane or tris(3,4,5 trifluorophenyl)borane. Preference is given to tris(pentafluorophenyl)borane.

Suitable compounds (C) are preferably prepared by reaction of aluminum or boron compounds of the formula (XII) with water, alcohols, phenol derivatives, thiophenol derivatives or aniline derivatives, with halogenated and especially perfluorinated alcohols and phenols being of particular importance. Examples of particularly useful compounds are pentafluorophenol, 1,1-bis(pentafluorophenyl)methanol and 4-hydroxy -2,2',3,3',4',5,5',6,6'-nonafluorobiphenyl. Examples of combinations of compounds of the formula (XII) with Brönsted acids are, in particular, trimethylaluminum/pentafluorophenol, trimethylaluminum/1-bis(pentafluorophenyl)methanol, trimethylaluminum/4-hydroxy-2,2',3,3',4',5,5',6,6'-nonafluorobiphenyl, triethylaluminum/pentafluorophenol and triisobutylaluminum/pentafluorophenol and triethylaluminum/4,4'-dihydroxy-2,2',3,3',5,5',6,6'-octafluorobiphenyl hydrate.

In further suitable aluminum and boron compounds of the formula (XII), R^{1D} is an OH group, as, for example, in boronic acids and borinic acids, with borinic acids having perfluorinated aryl radicals, for example (C₆F₅)₂BOH. being worthy of particular mention.

Strong uncharged Lewis acids suitable as activating compounds (C) also include the reaction products of a boronic acid with two equivalents of a trialkylaluminum or the reaction products of a trialkylaluminum with two equivalents of an acidic fluorinated, in particular perfluorinated, carbon compound such as pentafluorophenol or bis(pentafluorophenyl)borinic acid.

Suitable ionic compounds having Lewis-acid cations include salt-like compounds of the cation of the general formula (XIII)

[((M^{3D})^{a+})Q₁Q₂...Q_{z}]^{d+} (XIII)

where
- M^{3D}: is an element of groups 1 to 16 of the Periodic Table of the Elements,
- Q₁ to Q₂: are singly negatively charged groups such as C₁-C₂₈-alkyl, C₆-C₁₅-aryl, alkylaryl, arylalkyl, haloalkyl, haloaryl each having from 6 to 20 carbon atoms in the aryl radical and from 1 to 28 carbon atoms in the alkyl radical, C₃-C₁₀-cycloalkyl which may bear C₁-C₁₀-alkyl groups as substituents, halogen, C₁-C₂₈-alkoxy, C₆-C₁₅-aryloxy, silyl or mercaptyl groups,
- a: is an integer from 1 to 6 and
- z: is an integer from 0 to 5,
- d: corresponds to the difference a - z, but d is greater than or equal to 1.

Particularly useful cations are carbonium cations, oxonium cations and sulfonium cations and also cationic transition metal complexes, in particular the triphenylmethyl cation, the silver cation and the 1,1'-dimethylferrocenyl cation. They preferably have noncoordinating counterions, in particular boron compounds as are also mentioned in WO 91/09882, preferably tetrakis(pentafluorophenyl)borate.

Salts having noncoordinating anions can also be prepared by combining a boron or aluminum compound, e.g. an aluminum alkyl, with a second compound which can react to link two or more boron or aluminum atoms, e.g. water, and a third compound which forms an ionizing ionic compound with the boron or aluminum compound, e.g. triphenylchloromethane, or optionally a base, preferably an organic nitrogen-comprising base, for example an amine, an aniline derivative or a nitrogen heterocycle. In addition, a fourth compound which likewise reacts with the boron or aluminium compound, e.g. pentafluorophenol, can be added.

Ionic compounds having Brönsted acids as cations preferably likewise have noncoordinating counterions. As Brönsted acid, particular preference is given to protonated amine or aniline derivatives. Preferred cations are N,N-dimethylanilinium, N,N-dimethylcylohexylammonium and N,N-dimethylbenzylammonium and also derivatives of the latter two.

Compounds comprising anionic boron heterocycles as are described in WO 9736937 are also suitable as component C), in particular dimethylanilinium boratabenzene or trityl boratabenzene.

Preferred ionic compounds C) comprise borates which bear at least two perfluorinated aryl radicals. Particular preference is given to N,N-dimethylanilinium tetrakis(pentafluorophenyl)borate and in particular N,N-dimethylcyclohexylammonium tetrakis(pentafluorophenyl)borate, N,N-dimethylbenzylammonium tetrakis(pentafluorophenyl)borate or trityl tetrakispentafluorophenylborate.

It is also possible for two or more borate anions to be joined to one another, as in the dianion [(C₆F₅)₂B-C₆F₄-B(C₆F₅)₂]²⁻ or the borate anion can be bound via a bridge to a suitable functional group on the support surface.

Further suitable activating compounds (C) are listed in WO 00/31090.

The amount of strong, uncharged Lewis acids, ionic compounds having Lewis-acid cations or ionic compounds having Brönsted acids as cations is preferably from 0.1 to 20 equivalents, preferably from 1 to 10 equivalents and particularly preferably from 1 to 2 equivalents, based on the metallocene compound.

Suitable activated compounds (C) also include boron-aluminum compounds such as di[bis(pentafluorophenyl)boroxy]methylalane. Examples of such boron-aluminum compounds are those disclosed in WO 99/06414.

It is also possible to use mixtures of all the abovementioned activating compounds (C). Preferred mixtures comprise aluminoxanes, in particular methylaluminoxane, and an ionic compound, in particular one comprising the tetrakis(pentafluorophenyl)borate anion, and/or a strong uncharged Lewis acid, in particular tris(pentafluorophenyl)borane or a boroxin.

The metallocene compound is preferably used in a solvent, preferably an aromatic hydrocarbon having from 6 to 20 carbon atoms, in particular xylenes, toluene, pentane, hexane, heptane or a mixture thereof.

Particular preference is given to the combinations of the preferred embodiments of (C) with the preferred embodiments of the metallocene compound and of the prepolymerized chromium-comprising precatalyst.

Preference is given to an aluminoxane as activator (C) for the metallocene compound. Preference is also given to the combination of salt-like compounds of the cation of the general formula (XIII), in particular N,N-dimethylanilinium tetrakis(pentafluorophenyl)borate, N,N-dimethyl-cyclohexylammonium tetrakis(pentafluorophenyl)borate, N,N-dimethylbenzylammonium tetrakis-(pentafluorophenyl)borate or trityl tetrakispentafluorophenylborate, as activator (C). In addition, the reaction products of aluminum compounds of the formula (XII) with perfluorinated alcohols and phenols are particularly useful as activator (C).

The metallocene compound is usually applied in an amount in the range from 0.1 to 100 mol, preferably from 1 to 20 mol and particularly preferably from 2 to 10 mol, to the prepolymerized chromium-comprising precatalyst. When the metallocene compound is used as sole catalyst under the same reaction conditions in the homopolymerization or copolymerization of ethylene, it preferably produces a higher Mw than the prepolymerized chromium-comprising precatalyst when the latter is used as sole complex under the same reaction conditions.

Preference is given to a mixed catalyst comprising at least one metallocene compound, at least one prepolymerized chromium-comprising precatalyst and at least one activating compound (C). It is possible, for example, for two different metallocene compounds to be applied to one or two different prepolymerized chromium-comprising precatalysts. Preference is given to applying at least one metallocene compound, preferably one metallocene compound, to one prepolymerized chromium-comprising precatalyst in order to ensure a relative spatial proximity of the various catalyst sites and thus obtain good mixing of the different polymers formed.

To prepare the mixed catalyst of the invention, the metallocene compound and/or activator (C) are/is preferably immobilized on the prepolymerized chromium-comprising precatalyst by physisorption or else by means of a chemical reaction, i.e. covalent bonding of the components, with reactive groups on the support surface.

The order in which prepolymerized chromium-comprising precatalyst, metallocene compound and the activating compound (C) are combined is in principle immaterial. After the individual process steps, the various intermediates can be washed with suitably inert solvents such as aliphatic or aromatic hydrocarbons. The metallocene compound and the activating compound (C) can be immobilized independently of one another, e.g. in succession or simultaneously. Thus, the prepolymerized chromium-comprising precatalyst can firstly be brought into contact with the activating compound or compounds (C) or else firstly with the metallocene compound or compounds. Preactivation of the metallocene compound by means of one or more activating compounds (C) prior to mixing with the prepolymerized chromium-comprising precatalyst is also possible. Preactivation is generally carried out at temperatures of 10-100°C, preferably 20-80°C.

The application of the metallocene compound and the activating compound (C) to the support is generally carried out in an inert solvent which can be removed by filtration or evaporation after application to the support is complete. After the individual process steps, the solid can be washed with suitable inert solvents such as aliphatic or aromatic hydrocarbons and dried. However, the use of the still moist, supported mixed catalyst is also possible.

In a preferred embodiment of the preparation of the supported mixed catalyst system, a metallocene compound is brought into contact with an activating compound (C) and subsequently mixed with the prepolymerized chromium-comprising precatalyst. The resulting supported mixed catalyst system is preferably dried to ensure that all or most of the solvent is removed from the pores of the support material. The mixed catalyst is preferably obtained as a free-flowing powder. Examples of the industrial implementation of the above process are described in WO 96/00243, WO 98/40419 or WO 00/05277.

The mixed catalyst can further comprise, as additional component (E), a metal compound of the general formula (XX),

M^{G}(R^{1G})ᵣG(R^{2G})ₛG (R^{3G})ₜG (XX)

where
- M^{G}: is Li, Na, K, Be, Mg, Ca, Sr, Ba, boron, aluminum, gallium, indium, thallium, zinc, in particular Li, Na, K, Mg, boron, aluminum or Zn,
- R^{1G}: is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
- R^{2G} and R^{3G}: are each hydrogen, halogen, C₁-C₁₀-alkyl, C₆-C₁₅-aryl, alkylaryl, arylalkyl or alkoxy each having from 1 to 20 carbon atoms in the alkyl radical and from 6 to 20 carbon atoms in the aryl radical, or alkoxy comprising C₁-C₁₀-alkyl or C₆-C₁₅- aryl,
- r^{G}: is an integer from 1 to 3
and
- s^{G} and t^{G}: are integers from 0 to 2 with the sum r^{G}+s^{G}+t^{G} corresponding to the valence of M^{G},
where the component (E) is usually not identical to the component (C). It is also possible to use mixtures of various metal compounds of the formula (XX).

Among the metal compounds of the formula (XX), preference is given to those in which
- M^{G}: is lithium, magnesium, boron or aluminum and
- R^{1G}: is C₁-C₂₀-alkyl.

Particularly preferred metal compounds of the formula (XX) are methyllithium, ethyllithium, n-butyllithium, methylmagnesium chloride, methylmagnesium bromide, ethylmagnesium chloride, ethylmagnesium bromide, butylmagnesium chloride, dimethylmagnesium, diethylmagnesium, dibutylmagnesium, n-butyl-n-octylmagnesium, n-butyl-n-heptylmagnesium, in particular n-butyl-n-octylmagnesium, tri-n-hexylaluminum, triisobutylaluminum, tri-n-butylaluminum, triethylaluminum, dimethylaluminum chloride, dimethylaluminum fluoride, methylaluminum dichloride, methylaluminum sesquichloride, diethylaluminum chloride and trimethylaluminum and mixtures thereof. The partial hydrolysis products of aluminum alkyls with alcohols can also be used.

When a metal compound (E) is used, it is preferably present in the catalyst system in such an amount that the molar ratio of M^{G} from formula (XX) to transition metal from the metallocene compound is from 3000:1 to 0.1:1, preferably from 800:1 to 0.2:1 and particularly preferably from 100:1 to 1:1.

In general, the metal compound (E) of the general formula (XX) is used as constituent of a catalyst system for the polymerization or copolymerization of olefins. Here, the metal compound (E) can be used, for example, for preparing a mixed catalyst and/or can be added during or shortly before the polymerization. The metal compounds (E) used can be identical or different.

The component (E) can likewise be reacted in any order. For example, the metallocene compound can be brought into contact with the component(s) (C) and/or (E) either before or after being brought into contact with the olefins to be polymerized.

In another preferred embodiment, a mixed catalyst is prepared as described above from the metallocene compound, the activating compound (C) and the prepolymerized chromium-comprising precatalyst and this is brought into contact with the component (E) during, at the beginning of or shortly before the polymerization. Preference is given to firstly bringing (E) into contact with the α-olefin to be polymerized and subsequently adding the mixed catalyst.

It is also possible for the mixed catalyst firstly to be prepolymerized with α-olefins, preferably linear C₂-C₁₀-1-alkenes and in particular ethylene or propylene, and the resulting prepolymerized catalyst solid then to be used in the actual polymerization. The mass ratio of catalyst solid used in the prepolymerization to monomer polymerized onto it is usually in the range from 1:0.1 to 1:1000, preferably from 1:1 to 1:200.

Furthermore, a small amount of an olefin, preferably an α-olefin, for example vinylcyclohexane, styrene or phenyldimethylvinylsilane, as modified component, an antistatic or a suitable inert compound such as a wax or oil can be added as additive during or after the preparation of the mixed catalyst. The molar ratio of additives to metallocene compound is usually from 1:1000 to 1000:1, preferably from 1:5 to 20:1.

The mixed catalyst of the invention is suitable for the preparation of the polyethylene of the invention which has advantageous use and processing properties.

To prepare the polyethylene of the invention, ethylene is polymerized or ethylene is polymerized with α-olefins having from 3 to 10 carbon atoms as described above.

In the polymerization process of the invention, ethylene is polymerized or ethylene is polymerized with α-olefins having from 3 to 10 carbon atoms. Preferred α-olefins are linear or branched C₂-C₁₀-1-alkenes, in particular linear C₂-C₁₀-1-alkenes such as ethene, propene, 1-butene, 1-pentene, 1-hexene, 1-heptene, 1-octene, 1-decene or branched C₂-C₁₀-1-alkenes such as 4-methyl-1-pentene. Particularly preferred α-olefins are C₄-C₁₀-1-alkenes, in particular linear C₆-C₈-1-alkenes. It is also possible to polymerize mixtures of various α-olefins. Preference is given to polymerizing at least one α-olefin selected from the group consisting of ethene, propene, 1-butene, 1-pentene, 1-hexene, 1-heptene and 1-octene. Preference is given to monomer mixtures comprising at least 50 mol% of ethene.

The process of the invention for the polymerization of ethylene with α-olefins can be carried out using all industrially known polymerization processes at temperatures in the range from -60 to 350°C, preferably from 0 to 200°C and particularly preferably from 25 to 150°C, and under pressures of from 0.5 to 4000 bar, preferably from 1 to 100 bar and particularly preferably from 3 to 40 bar. The polymerization can be carried out in a known manner in bulk, in suspension, in the gas phase or in a supercritical medium in the conventional reactors used for the polymerization of olefins. It can be carried out batchwise or preferably continuously in one or more stages. High-pressure polymerization processes in tube reactors or autoclaves, solution processes, suspension processes, stirred gas-phase processes or gas-phase fluidized-bed processes are all possible.

The polymerizations are usually carried out at temperatures in the range from -60 to 350°C, preferably in the range from 20 to 300°C, and under pressures of from 0.5 to 4000 bar. The mean residence times are usually from 0.5 to 5 hours, preferably from 0.5 to 3 hours. The advantageous pressure and temperature ranges for carrying out the polymerizations usually depend on the polymerization method. In the case of high-pressure polymerization processes, which are usually carried out at pressures of from 1000 to 4000 bar, in particular from 2000 to 3500 bar, high polymerization temperatures are generally also set. Advantageous temperature ranges for these high-pressure polymerization processes are from 200 to 320°C, in particular from 220 to 290°C. In the case of low-pressure polymerization processes, a temperature which is at least a few degrees below the softening temperature of the polymer is generally set. In particular, temperatures of from 50 to 180°C, preferably from 70 to 120°C, are set in these polymerization processes. In the case of suspension polymerizations, the polymerization is usually carried out in a suspension medium, preferably in an inert hydrocarbon, for example in an aliphatic or cycloaliphatic hydrocarbon such as butane, isobutane, pentane, hexane, heptane, isooctane, cyclohexane, methylcyclohexane or a mixture of hydrocarbons or else in the monomers themselves. It is also possible to use petroleum spirit or hydrogenated diesel oil fractions which have carefully been freed of oxygen, sulfur compounds and moisture. The polymerization temperatures are generally in the range from -20 to 115°C, and the pressure is generally in the range from 1 to 100 bar. The solids content of the suspension is generally in the range from 10 to 80%. The polymerization can be carried out either batchwise, e.g. in stirring autoclaves, or continuously, e.g. in tube reactors, preferably in loop reactors. Particular preference is given to employing the Phillips PF process as described in US-A 3 242 150 and US-A 3 248 179. The gas-phase polymerization is generally carried out at from 30 to 125°C at pressures of from 1 to 50 bar. The gas-phase polymerization is preferably carried out in a fluidized bed using a carrier gas comprising nitrogen and/or propane and at an ethylene concentration of from 15 to 25% by volume. The temperature of the reactor is set in the range from 80 to 130°C and is kept constant by appropriately reducing the amount of ethylene fed in. Higher temperatures can reduce the activity of the chromium-comprising catalyst (A) and thus reduce the z-average molar mass.

Among the polymerization processes mentioned, particular preference is given to gas-phase polymerization, in particular in gas-phase fluidized-bed reactors, solution polymerization and suspension polymerization, in particular in loop reactors and stirred tank reactors. The gas-phase polymerization can also be carried out in the condensed or supercondensed mode, in which part of the circulating gas is cooled to below the dew point and is recirculated as a two-phase mixture to the reactor. It is also possible to use a multizone reactor in which two polymerization zones are linked to one another and the polymer is passed alternately through these two zones a number of times. The two zones can also have different polymerization conditions. Such a reactor is described, for example, in WO 97/04015. The different or identical polymerization processes can also, if desired, be connected in series so as to form a polymerization cascade, for example in the Hostalen® process. A parallel reactor arrangement using two or more identical or different processes is also possible. Furthermore, molar mass regulators, for example hydrogen, or conventional additives such as antistatics can also be used in the polymerizations.

The polymerization is preferably carried out in a single reactor, in particular in a gas-phase reactor. The polyethylene of the invention is obtained in the polymerization of ethylene with α-olefins having from 3 to 10 carbon atoms as a result of the mixed catalyst of the invention. The polyethylene powder obtained directly from the reactor has a very high homogeneity, so that, unlike the case of cascade processes, subsequent extrusion is not necessary to obtain a homogeneous product.

The production of polymer blends by intimate mixing of individual components or by melt extrusion in an extruder or kneader (cf., for example "Polymer Blends" in Ullmann's Encyclopedia of Industrial Chemistry, 6th Edition, 1998, Electronic Release) is often accompanied by particular difficulties. The melt viscosities of the high and low molecular weight components of a bimodal polyethylene blend are extremely different. While the low molecular weight component becomes quite fluid at the conventional temperatures for producing the blends of about 190 - 210°C, the high molecular weight component is only softened ("lentil soup"). Homogeneous mixing of the two components is therefore very difficult. In addition, it is known that the high molecular weight component can easily be damaged by thermal stress and by shear forces in the extruder, so that the properties of the blend deteriorate. The quality of mixing of such polyethylene blends is therefore often unsatisfactory.

The quality of mixing of the polyethylene powder obtained directly from the reactor can be tested by assessing thin slices ("microtome sections") of a sample under an optical microscope. Inhomogeneities show up in the form of specks or "white spots". The specks or "white spots" are predominantly high molecular weight, high-viscosity particles in a low-viscosity matrix (cf., for example, U. Burkhardt et al. in "Aufbereiten von Polymeren mit neuartigen Eigenschaften", VDI-Verlag, Düsseldorf 1995, p. 71). Such inclusions can reach a size of up to 300 µm, cause stress cracking and result in brittle failure of components. The better the quality of mixing of a polymer, the fewer and smaller are these inclusions. The quality of mixing of a polymer is determined quantitatively in accordance with ISO 13949. The measurement method provides for a microtome section to be produced from a sample of the polymer, the number and size of these inclusions to be counted/measured, and a grade for the quality of mixing of the polymer to be assigned according to a set-down evaluation scheme.

The preparation of the polyethylene of the invention directly in the reactor reduces the energy consumption, requires no subsequent blending processes and makes simple control of the molecular weight distributions and the molecular weight fractions of the various polymers possible. In addition, good mixing of the polyethylene is achieved.

The following examples illustrate the invention without restricting its scope.

The measured values described were determined in the following way:
NMR samples were dispensed under inert gas and, if appropriate, flame sealed. The solvent signals served as internal standard in the ¹H- and ¹³C-NMR spectra, and the chemical shifts were then converted into chemical shifts relative to TMS.

The determination of the vinyl group content is carried out by means of IR in accordance with ASTM D 6248-98. IR spectra were measured on 0.1 mm thick films produced by pressing at 180°C for 15 minutes. The 1-hexene content of the polymer samples was determined by means of IR spectroscopy using a chemical calibration of IR spectra versus NMR spectra.

The branches/1000 carbon atoms were determined by means of ¹³C-NMR as described by James C. Randall, JMS-REV. Macromol. Chem. Phys., C29 (2&3), 201-317 (1989), and are based on the total CH₃ group content/1000 carbon atoms. The side chains larger than CH₃/1000 carbon atoms is determined likewise, but the chain ends are not included here.

The density of the polymer samples was measured by means of IR spectroscopy using a chemical calibration of IR spectra versus density measured by the buoyancy method in accordance with ISO 1183-1.

The determination of the molar mass distributions and the means Mₙ, M_{w}, M_{z} and M_{w}/Mₙ derived therefrom was carried out by means of high-temperature gel permeation chromatography using a method based on DIN 55672 on a WATERS 150 C with the following columns connected in series: 3x SHODEX AT 806 MS, 1x SHODEX UT 807 and 1x SHODEX AT-G under the following conditions: solvent: 1,2,4-trichlorobenzene (stabilized with 0.025% by weight of 2,6-di-tert-butyl-4-methylphenol), flow: 1 ml/min, 500 µl injection volume, temperature: 140°C. Calibration of the columns was carried out by means of polyethylene standards having molar masses ranging from 100 to 10⁷ g/mol. The evaluation was carried out using the software Win-GPC from HS-Entwicklungsgesellschaft für wissenschaftliche Hard- und Software mbH, Ober-Hilbersheim.

For the purposes of the present invention, the expression "HLMI" stands, in a known manner, for "high load melt flow rate" and is always determined at 190°C under a load of 21.6 kg (190°C/21.6 kg) in accordance with ISO 1133.

The determination of the limiting viscosity eta, which gives the limiting value of the viscosity number on extrapolation of the polymer concentration to zero, was carried out using an automatic Ubbelohde viscometer (Lauda PVS 1) at a concentration of 0.001 g/ml in decalin as solvent at 135°C in accordance with ISO 1628.

The bulk density was determined in accordance with DIN 53468, measured on the polymer powder.

The tensile strength was measured in accordance with ISO 527.

The content of elemental chromium was determined photometrically via peroxide complexes. The content of the elements zirconium and chlorine was determined titrimetrically.

The transparency was determined in accordance with ASTM D 1746 - 03 on films having a thickness of 50 µm on a BYK Gardener Haze Guard Plus Device calibrated using calibration cells 77.5, on at least 5 films having a size of 10x10 cm.

The haze was determined in accordance with ASTM D 1003 - 00 on films having a thickness of 50 µm on a BYK Gardener Haze Guard Plus Device on at least 5 films having a size of 10x10 cm.

The gloss at 20° and 60° was determined in accordance with ASTM D 2457 - 03 on films having a thickness of 50 µm on a gloss meter with a vacuum plate for clamping the film.

Abbreviations in the following table:

| | |
|---|---|
| cat. | catalyst |
| T(poly) | temperature of the polymerization |
| M_{w} | weight average molar mass |
| Mₙ | number average molar mass |
| M_{z} | z-average molar mass |
| density | polymer density |
| Prod. | productivity of the catalyst in g of polymer obtained per g of catalyst used |

Bisindenylzirkonium dichloride and methylaluminoxane are commercially available from Crompton.

### Example 1

### Step a) Application of the chromium component to a support 1550 g of the supported chromium component (chromium(III) nitrate 9-hydrate) having a chromium content of 1% by weight in the chromium-comprising solid were prepared as described in example 1 (without activation) of

EP-A-0 589 350.

### Step b) Activation of the chromium component

1550 g of the catalyst precursor from step a) were activated by means of air at a temperature of 520°C for 10 hours in a fluidized-bed activator. To carry out the activation, the catalyst precursor was heated to 350°C over a period of 1 hour, maintained at this temperature for 1 hour, subsequently heated to the calcination temperature, maintained at this temperature for 2 hours and subsequently cooled, with cooling below a temperature of 350°C being carried out under nitrogen.
The yield was 1200 g.

### Step c) Prepolymerization

900 g of the activated supported chromium component from step b) were suspended in 20 l of heptane in a stirred apparatus. The suspension was then brought to a temperature of 65°C under argon, and ethylene was subsequently introduced at a rate of 80 l/h.

After 60 minutes, the introduction of ethylene was stopped and the ethylene dissolved in heptane was stripped out by means of argon over a time of 2 hours. The suspension which had been freed of residual monomer was then transferred to a glass frit filter flushed with argon. The prepolymerized chromium-comprising precatalyst was filtered off, washed with 10 l of heptane and filtered again. The prepolymerized chromium-comprising precatalyst obtained in this way was dried at a temperature of 40°C under reduced pressure. This gave 1050 g of the prepolymerized chromium-comprising precatalyst having a Cr content of 0.8% by weight and a residual solvent content of 0.95% by weight.

### Step d) Application of the metallocene compound to a support

3.54 g (9.02 mmol) of bisindenylzirconium dichloride were dissolved in 450 ml of toluene, admixed with 189.9 ml of methylaluminoxane (902 mmol, 4.75 M solution in toluene) (Zr:Al = 1:100) and the mixture obtained in this way was stirred at room temperature for a further 15 minutes. 150 g of the prepolymerized precatalyst from step c) were subsequently added to the solution over a period of 10 minutes.

After stirring at room temperature for 1 hour, the suspension obtained in this way was filtered, the residue was washed twice with 400 ml each time of toluene and twice with 400 ml each time of heptane. The solid obtained in this way was dried at room temperature under reduced pressure. This gave 204.5 g of the mixed catalyst having a residual solvent content of 5.5% by weight, a chromium content of 0.57% by weight and a zirconium content of 0.29% by weight, in each case based on the mixed catalyst.

### Examples 2 to 5

The polymerization of ethylene was carried out using the mixed catalyst prepared in example 1 in a fluidized-bed reactor having a diameter of 0.5 m using nitrogen as fluidizing gas at a total pressure of 20 bar. The reaction temperature, productivity and the composition of the reactor gas are reported in table 1. The output was 5 kg/h. 0.1 g of triisobutylaluminum per hour was metered in each case. The properties of the polymers obtained are summarized in table 2. To shift the molar mass to a low M_{w} and to reduce the proportion of high molecular weight polyethylene, either the proportion of hydrogen in the reactor is increased or the polymerization temperature is increased.

**Table 1:**

| Example | 2 | 3 | 4 | 5 |
|---|---|---|---|---|
| Reactor temperature [°C] | 100 | 105 | 100 | 94 |
| Ethylene concentration [% by volume] | 54.3 | 54.9 | 54.4 | 52.6 |
| Hexene concentration [% by volume] | - | 0.01 | 0.04 | 1.0 |
| H2 concentration [l/h] | - | - | 0.5 | 0.4 |
| Productivity [g of PE/g] | 2200 | 2800 | 4000 | 3000 |

**Table 2**

| Example | 2 | 3 | 4 | 5 |
|---|---|---|---|---|
| MI 2.16 kg [g/10 min] | 1.1 | 1 | 1.3 | 2.8 |
| HLMI 21.6 kg [g/10 min] | 17.2 | 18.2 | 22 | 48 |
| Bulk density [g/l] | 356 | 378 | 391 | 315 |
| Density [g/cm³] | 0.9491 | 0.9498 | 0.9425 | 0.9207 |
| Eta [dl/g] | 2.41 | 2.14 | 2.15 | 2.28 |
| M_{w} [g/mol] | 142310 | 129850 | 122038 | 113023 |
| M_{w}/Mₙ | 5.16 | 5.96 | 5.41 | 6.29 |
| M_{z} [g/mol] | 322460 | 282398 | 255935 | 673327 |
| -HC=CH- [1/1000C] | 0.45 | 0.46 | 0.32 | 0.19 |
| -HC=CH2 [1/1000C] | 0.13 | 0.17 | 0.17 | 0.27 |
| >C=CH2 [1/1000C] | 0.06 | 0.07 | 0.16 | 0.38 |
| Total CH3 [1/1000C] | 1.00 | 1 | 1.6 | 12.6 |
| 1-Hexene [%] | <0.80 | <0.80 | 1.1 | 6.9 |

### Example 6

### Granulation and film processing

The polymer powder was homogenized and palletized on a ZSK 30 from Werner & Pfleiderer using the screw combination 8A. The processing temperature was 220°C, and the screw rotation rate was 250/min at a maximum throughput of 20 kg/h. To stabilize the polymer powder, 1500 ppm of Irganox B215 were mixed into it.

The material was processed on a Weber blown film plant using the collapsing boards.

The diameter of the annular die was 50 mm, the gap width was 2/50 and the cooling air impingement angle was 45°. No screens were used. The 25D screw extruder having a diameter of 30 mm was operated at a rotational speed of 50 revolutions/min, corresponding to a throughput of 5.1 kg/h. A blow-up ratio of 1:2 and a take-off speed of 4.9 m/10 min were selected for film production. The height of the frost line was 160 mm. Films having a thickness of 50 µm were produced.

**Table 3: Processing data and the use properties of the films**

| Molding composition from Ex. | 2 | 3 | 4 | 5 | C1 |
|---|---|---|---|---|---|
| Density [g/cm³] | 0.9491 | 0.9498 | 0.9425 | 0.9207 | 0.918 |
| MI 2.16 kg [g/10 min] | 1.1 | 1 | 1.3 | 2.4 | 3.5 |
| Throughput [kg/h] | 5 | 5 | 5 | 5 | 5 |
| Rotational speed [rpm] | 53 | 53 | 53 | 53 | 53 |
| Melt temp. [°C] | 222 | 223 | 224 | 217 | 218 |
| Transparency [%] | 95.1 | 94.9 | 95.7 | 97.3 | 25.4 |
| Haze [%] | 28.2 | 30.9 | 26.5 | 17.1 | 42.6 |
| Gloss 20° | 13.3 | 14.5 | 16.6 | 22.9 | 1.5 |
| Gloss 60° | 56.8 | 60.6 | 63 | 77.1 | 15.5 |
| DDI [g] | - | - | 180 | 510 | 412 |
| Tensile strength Wtot/a | 5.6 | 5.7 | 6.9 | 15.2 | 25.4 |

The films produced using the molding composition of the invention (examples 2 to 5) display a significantly higher transparency even at a higher density.

### Comparative example 1

Exxon m-LLDPE 18TFA is an ethylene-1-hexene copolymer prepared by means of metallocene.

## Claims

1. A molding composition comprising polyethylene and having a density in the range from 0.915 to 0.955 g/cm³, an MI in the range from 0 to 3.5 g/10 min, an MFR in the range from 5 to 50, a polydispersity M_{w}/Mₙ in the range from 5 to 20, a z-average molar mass M_{z} of less than 1 million g/mol, and at least 0.05 vinyl groups/1000 carbon atoms..

2. The molding composition according to claim 1, comprising an amount of less than 0.5% by weight, based on the total weight of the molding composition, of polyethylene having a molar mass of more than 1 million g/mol.

3. The molding composition according to claim 1 or 2, wherein the molar mass distribution is monomodal.

4. The molding composition according to any one of claims 1 to 3, wherein the molding composition is obtainable in a single reactor in the presence of a mixed catalyst comprising a prepolymerized chromium compound and a metallocene compound.

5. A process for preparing the molding composition according to any one of claims 1 to 4, comprising the step of polymerizing ethylene, optionally in the presence of 1-alkenes of the formula R¹CH=CH₂, where R¹ is hydrogen or an alkyl radical having from 1 to 10 carbon atoms, at a temperature of from 20 to 200°C and a pressure of from 0.05 to 1 MPa, in the presence of a mixed catalyst comprising a prepolymerized chromium compound and a metallocene compound.

6. A mixed catalyst comprising a prepolymerized chromium compound and a metallocene compound.

7. The mixed catalyst according to claim 6, wherein the mixed catalyst is obtainable by means the steps of:
a) immobilizing a chromium compound on a solid support,
b) activating the immobilized chromium compound by heat treatment,
c) prepolymerizing the activated chromium compound, and
d) using the prepolymerized chromium compound as support material for the immobilization of the metallocene compound.

8. The mixed catalyst according to claim 6 or 7, wherein the metallocene compound is an unbridged metallocene complex (B) of the general formula (II): 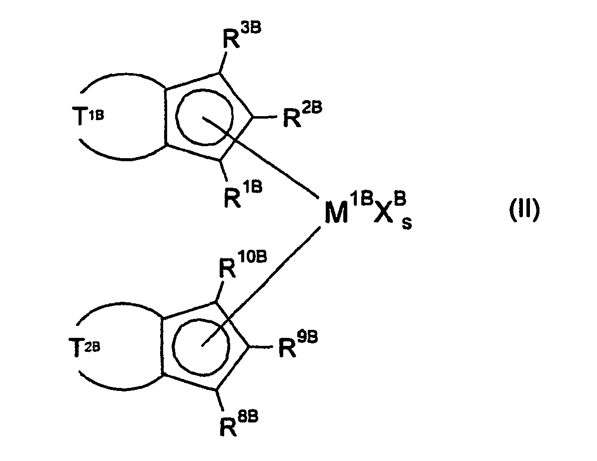 where the substituents and indices have the following meanings:
M^{1B} is a metal of group 4 of the Periodic Table of the Elements, in particular Zr, 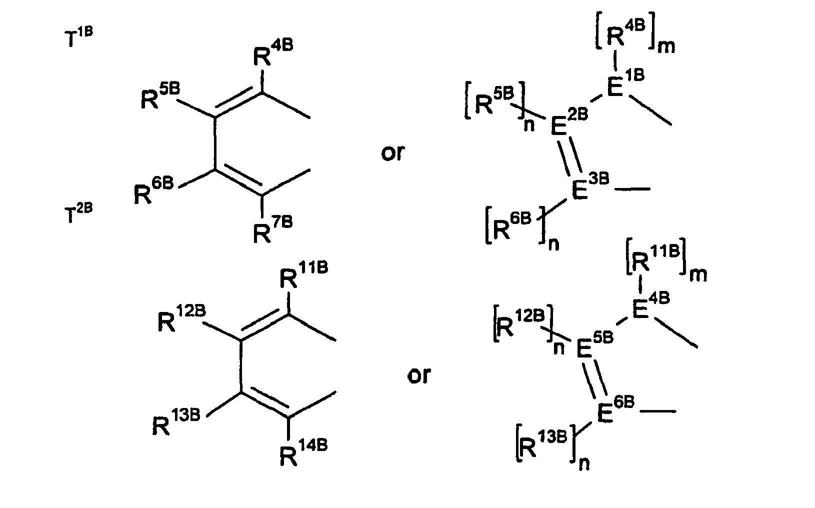
E^{1B},E^{4B} are each, independently of one another, nitrogen, phosphorus, oxygen or sulfur,
m is 0 when E^{1B} or E^{4B} is oxygen or sulfur and is 1 when E^{1B} or E^{4B} is nitrogen or phosphorus,
E^{2B},E^{3B},E^{5B},E^{6B} are each, independently of one another, carbon, nitrogen or phosphorus,
n is 0 when E^{2B},E^{3B},E^{5B} or E^{6B} is nitrogen or phosphorus and is 1 when E^{1B} or E^{4B} is carbon,
R^{1B} to R^{14B} are each, independently of one another, hydrogen, C₁-C₂₂-alkyl, C₂-C₂₂- alkenyl, C₆-C₂₂-aryl, arylalkyl having from 1 to 16 carbon atoms in the alkyl radical and from 6 to 21 carbon atoms in the aryl radical, NR^{15B}₂, N(SiR^{15B}₃)₂, OR^{15B}, OSiR^{15B}₃, SiR^{15B}₃, where the organic radicals R^{1B}-R^{14B} may also be substituted by halogens and/or two adjacent radicals R^{1B}-R^{14BB} may also be joined to form a five-, six- or seven- membered ring, and/or two adjacent radicals R^{1B}-R^{14B} may be joined to form a five-, six- or seven-membered heterocycle comprising at least one atom from the group consisting of N, P, O and S, where
R^{15B} are identical or different and are each C₁-C₂₀-alkyl, C₆-C₁₅-aryl, arylalkyl having from 1 to 16 carbon atoms in the alkyl radical and from 6 to 21 carbon atoms in the aryl radical, and
X^{B} is fluorine, chlorine, bromine, iodine, hydrogen, C₁-C₁₀-alkyl, C₂-C₁₀-alkenyl, C₆-C₁₅-aryl, arylalkyl having from 1 to 10 carbon atoms in the alkyl radical and from 6 to 20 carbon atoms in the aryl radical, -OR^{16B} or -NR^{16B}R^{17B}, -OC(O)R^{16A}, -O₃SR^{16B}, R^{16B}C(O)-CH-CO-R^{17B}, CO or two radicals X^{B} form a substituted or unsubstituted diene ligand, in particular a 1,3-diene ligand, and the radicals X^{B} are identical or different and may be joined to one another,
s is 1 or 2, with s being, depending on the valence of M^{1B}, such that the metallocene complex of the general formula (II) is uncharged,
where
R^{16B} and R1^{7B} are each C₁-C₁₀-alkyl, C₆-C₁₅-aryl, arylalkyl, fluoroalkyl or fluoroaryl each having from 1 to 10 carbon atoms in the alkyl radical and from 6 to 20 carbon atoms in the aryl radical.

9. A process for producing films comprising the step of plasticizing the molding composition according to any one of claims 1 to 4 at a melt temperature in the range from 190 to 230°C, extruding the plasticized molding composition, and cooling the extruded molding composition.

10. A film comprising a molding composition according to any one of claims 1 to 4, said molding composition being present in an amount of from 50 to 100% by weight based on the total polymer material.

11. The film according to claim 10, further comprising from 0 to 30% by weight of at least one additive.

12. The use of a film according to claim 10 or 11 for producing carrier bags.

13. The use of a film according to claim 10 or 11 for producing heat sealable layers in food packaging.

## Patentansprüche

1. Formmasse, die aus Polyethylen besteht und eine Dichte im Bereich von 0,915 bis 0,955 g/cm³, einen MI im Bereich von 0 bis 3,5 g/10 min, einen MFR im Bereich von 5 bis 50, eine Polydispersität M_{w}/Mₙ im Bereich von 5 bis 20 und eine z-gemittelte Molmasse M_{z} von kleiner als 1 Million g/mol und mindestens 0,05 Vinylgruppen/1000 Kohlenstoffatomen aufweist.

2. Formmasse nach Anspruch 1, umfassend eine Menge von kleiner als 0,5 Gew.-%, bezogen auf das Gesamtgewicht der Formmasse, Polyethylen mit einer Molmasse von grösser als 1 Million g/mol.

3. Formmasse nach Anspruch 1 oder 2, wobei die Molmassenverteilung monomodal ist.

4. Formmasse nach einem der Ansprüche 1 bis 3, wobei die Formmasse in einem einzigen Reaktor in Gegenwart eines Mischkatalysators, umfassend eine vorpolymerisierte Chromverbindung und eine Metallocenverbindung, erhältlich ist.

5. Verfahren zum Herstellen der Formmasse nach einem der Ansprüche 1 bis 4, umfassend den Schritt des Polymerisierens von Ethylen, optional in Gegenwart von 1-Alkenen der Formel R¹CH=CH₂, wobei R¹ Wasserstoff oder ein Alkylrest mit von 1 bis 10 Kohlenstoffatom(en), bei einer Temperatur von 20 bis 200°C und einem Druck von 0,05 bis 1 MPa, in Gegenwart eines Mischkatalysators, umfassend eine vorpolymerisierte Chromverbindung und eine Metallocenverbindung, ist.

6. Mischkatalysator, umfassend eine vorpolymerisierte Chromverbindung und eine Metallocenverbindung.

7. Mischkatalysator nach Anspruch 6, wobei der Mischkatalysator mittels der folgenden Schritte erhältlich ist:
a) Immobilisierung einer Chromverbindung auf einem festen Träger,
b) Aktivierung der immobilisierten Chromverbindung durch Wärmebehandlung,
c) Vorpolymerisierung der aktivierten Chromverbindung, und
d) Verwendung der vorpolymerisierten Chromverbindung als Trägermaterial für die Immobilisierung der Metallocenverbindung.

8. Mischkatalysator nach Anspruch 6 oder 7, wobei die Metallocenverbindung ein nicht überbrückter Metallocenkomplex (B) der allgemeinen Formel (II) 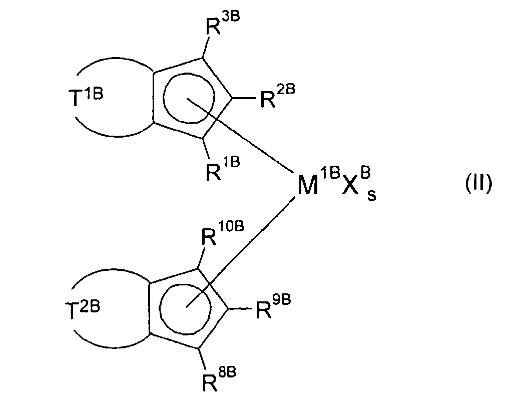 ist, wobei die Substituenten und Indizes die folgenden Bedeutungen haben:
M^{1B} ein Metall der Gruppe 4 des Periodensystems der Elemente, insbesondere Zr ist, 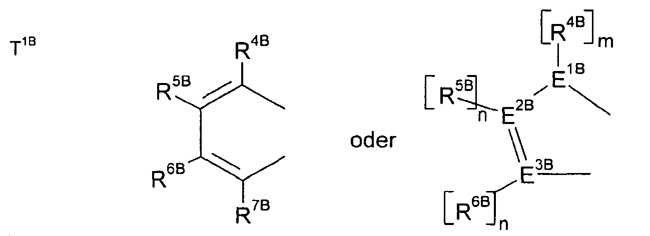
ist 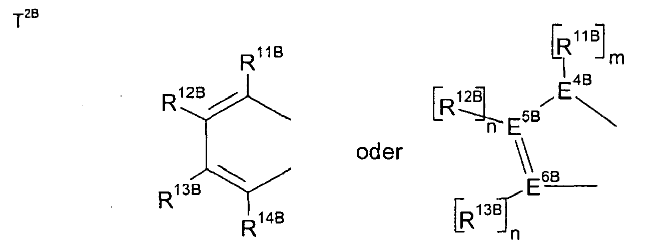 ist, wobei
E^{1B},E^{4B} jeweils unabhängig voneinander Stickstoff, Phosphor, Sauerstoff oder Schwefel sind,
m 0 ist, wenn E^{1B} oder E^{4B} Sauerstoff oder Schwefel ist und 1 ist, wenn E^{1B} oder E^{4B} Stickstoff oder Phosphor ist,
E^{2B},E^{3B},E^{5B},E^{6B} jeweils unabhängig voneinander Kohlenstoff, Stickstoff oder Phosphor sind,
n 0 ist, wenn E^{2B},E^{3B},E^{5B} oder E^{6B} Stickstoff oder Phosphor ist und 1 ist, wenn E^{1B} oder E^{4B} Kohlenstoff ist,
R^{1B} bis R^{14B} jeweils unabhängig voneinander Wasserstoff, C₁- bis C₂₂-Alkyl, C₂- bis C₂₂-Alkenyl, C₆- bis C₂₂-Aryl, Arylalkyl mit von 1 bis 16 Kohlenstoffatom(en) im Alkylrest und von 6 bis 21 Kohlenstoffatomen im Arylrest, NR^{15B}₂, N(SiR^{15B}₃)₂, OR^{15B}, OSiR^{15B}₃, SiR^{15B}₃ sind, wobei die organischen Reste R^{1B} bis R^{14B} auch durch Halogene substituiert sein können und/oder zwei benachbarte Reste R^{1B} bis R^{14B} auch zur Bildung eines fünf-, sechs- oder siebengliedrigen Rings miteinander verbunden sein können, und/oder zwei benachbarte Reste R^{1B} bis R^{14B} zur Bildung eines fünf-, sechs- oder siebengliedrigen Heterocyclus, umfassend mindestens ein Atom aus der Gruppe, bestehend aus N, P, O oder S, miteinander verbunden sein können, wobei
R^{15B} gleich oder verschieden ist und jeweils C₁- bis C₂₀-Alkyl, C₆-C₁₅-Aryl, Arylalkyl mit von 1 bis 16 Kohlenstoffatom(en) im Alkylrest und von 6 bis 21 Kohlenstoffatomen im Arylrest ist, und
X^{B} Fluor, Chlor, Brom, Jod, Wasserstoff, C₁- bis C₁₀-Alkyl, C₂- bis C₁₀-Alkenyl, C₆- bis C₁₅-Aryl, Arylalkyl mit von 1 bis 10 Kohlenstoffatom(en) im Alkylrest und von 6 bis 20 Kohlenstoffatomen im Arylrest ist, -OR^{16B} oder -NR^{16B}R^{17B}, -OC(O)R^{16A}, -O₃SR^{16B}, R^{16B}C(O)-CH-CO-R^{17B}, CO oder zwei X^{B}-Reste einen substituierten oder unsubstituierten Dienliganden, insbesondere einen 1,3-Dienliganden bilden, und die X^{B}-Reste gleich oder verschieden sind und gegebenenfalls miteinander verbunden sein können,
s 1 oder 2 ist, wobei s, abhängig von der Wertigkeit von M^{1B}, dergestalt ist, dass der Metallocenkomplex der allgemeinen Formel (II) ungeladen ist,
wobei
R^{16B} und R^{17B} jeweils C₁- bis C₁₀-Alkyl, C₆- bis C₁₅-Aryl, Arylalkyl, Fluoralkyl oder Fluoraryl mit jeweils von 1 bis 10 Kohlenstoffatom(en) im Alkylrest und von 6 bis 20 Kohlenstoffatomen im Arylrest sind.

9. Verfahren zur Herstellung von Folien, umfassend den Schritt des Plastifizierens der Formmasse nach einem der Ansprüche 1 bis 4 bei einer Schmelztemperatur im Bereich von 190 bis 230 °C, Extrudieren der plastifizierten Formmasse und Abkühlen der extrudierten Formmasse.

10. Folie, umfassend eine Formmasse nach einem der Ansprüche 1 bis 4, wobei die Formmasse in einer Menge von 50 bis 100 Gew.-%, bezogen auf das Gesamtpolymermaterial vorliegt.

11. Folie nach Anspruch 10, ferner umfassend von 0 bis 30 Gew.-% von mindestens einem Additiv.

12. Verwendung einer Folie nach Anspruch 10 oder 11 zur Herstellung von Tragetaschen.

13. Verwendung einer Folie nach Anspruch 10 oder 11 zur Herstellung heißsiegelbarer Schichten in einer Lebensmittelverpackung.

## Revendications

1. Composition de moulage comprenant du polyéthylène et présentant une densité dans la plage de 0,915 à 0,955 g/cm³, un MI dans la plage de 0 à 3,5 g/10 min, un MFR dans la plage de 5 à 50, une polydispersité M_{w}/Mₙ dans la plage de 5 à 20, une masse molaire moyenne en z M_{z} de moins de 1 million g/mole, et au moins 0,05 groupe vinyle/1000 atomes de carbone.

2. Composition de moulage selon la revendication 1, comprenant une teneur inférieure à 0,5% en poids, basée sur le poids total de la composition de moulage, de polyéthylène présentant une masse molaire de plus de 1 million g/mole.

3. Composition de moulage selon la revendication 1 ou 2, dans laquelle la distribution des masses molaires est monomodale.

4. Composition de moulage selon l'une quelconque des revendications 1 à 3, dans laquelle la composition de moulage peut être obtenue dans un réacteur unique en présence d'un catalyseur mixte comprenant un composé prépolymérisé à base de chrome et un composé de type métallocène.

5. Procédé pour la préparation de la composition de moulage selon l'une quelconque des revendications 1 à 4, comprenant l'étape de polymérisation d'éthylène, éventuellement en présence de 1-alcènes de formule R¹CH=CH₂, où R¹ représente hydrogène ou un radical alkyle comprenant 1 à 10 atomes de carbone, à une température de 20 à 200°C et à une pression de 0,05 à 1 MPa, en présence d'un catalyseur mixte comprenant un composé prépolymérisé à base de chrome et un composé de type métallocène.

6. Catalyseur mixte comprenant un composé prépolymérisé à base de chrome et un composé de type métallocène.

7. Catalyseur mixte selon la revendication 6, où le catalyseur mixte peut être obtenu au moyen des étapes de :
a) immobilisation d'un composé à base de chrome sur un support solide,
b) activation du composé à base de chrome immobilisé par un traitement à la chaleur,
c) prépolymérisation du composé à base de chrome activé, et
d) utilisation du composé à base de chrome prépolymérisé comme matériel support pour l'immobilisation du composé de type métallocène.

8. Catalyseur mixte selon la revendication 6 ou 7, dans lequel le composé de type métallocène est un complexe de type métallocène non ponté (B) de formule générale(II) : 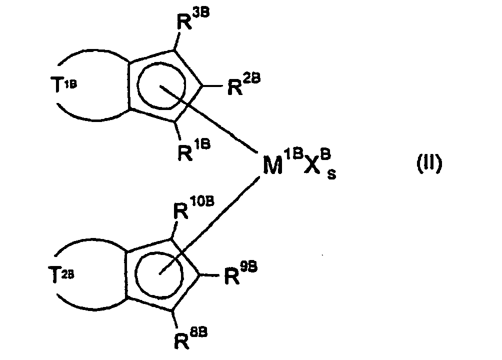 où les substituants et indices ont les significations suivantes :
M^{1B} représente un métal du groupe 4 du tableau périodique des éléments, en particulier Zr, 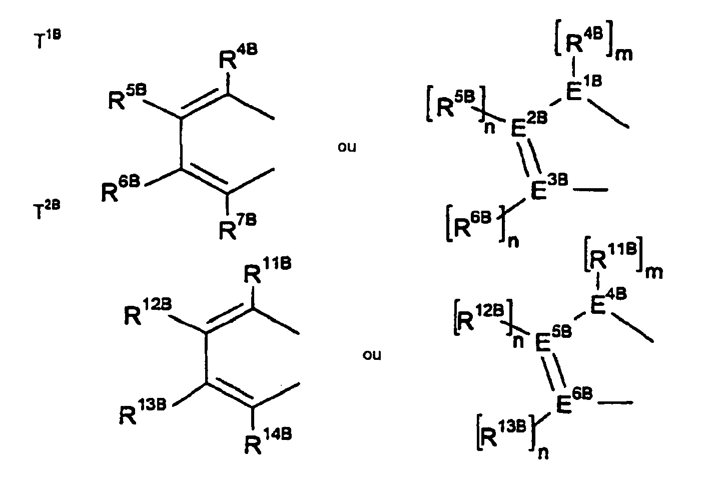
E^{1B}, E^{4B} représentent chacun, indépendamment l'un de l'autre, azote, phosphore, oxygène ou soufre,
m vaut 0 quand E^{1B} ou E^{4B} représente oxygène ou soufre et vaut 1 quand E^{1B} ou E^{4B} représente azote ou phosphore,
E^{2B}, E^{3B}, E^{5B}, E^{6B} représentent chacun, indépendamment l'un de l'autre, carbone, azote ou phosphore,
n vaut 0 quand E^{2B} , E^{3B}, E^{5B} ou E^{6B} représente azote ou phosphore et vaut 1 quand E^{1B} ou E^{4B} représente carbone,
R^{1B} à R^{14B} représentent chacun, indépendamment l'un de l'autre, hydrogène, C₁-C₂₂-alkyle, C₂-C₂₂-alcényle, C₆-C₂₂-aryle, arylalkyle comprenant 1 à 16 atomes de carbone dans le radical alkyle et 6 à 21 atomes de carbone dans le radical aryle, NR^{15B}₂, N(SiR^{15B}₃)₂, OR^{15B}, OSiR^{15B}₃, SiR^{15B}₃, où les radicaux organiques R^{1B}-R^{14B} peuvent aussi être substitués par des halogènes et/ou deux radicaux adjacents R^{1B}-R^{14B} peuvent aussi être reliés pour former un cycle à cinq, six ou sept chaînons et/ou deux radicaux adjacents R^{1B}-R^{14B} peuvent être reliés pour former un hétérocycle à cinq, six ou sept chaînons comprenant au moins un atome du groupe constitué par N, P, O et S, où
R^{15B} sont identiques ou différents et représentent chacun C₁-C₂₀-alkyle, C₆-C₁₅-aryle, arylalkyle comprenant 1 à 16 atomes de carbone dans le radical alkyle et 6 à 21 atomes de carbone dans le radical aryle, et
X^{B} représente fluor, chlore, brome, iode, hydrogène, C₁-C₂₀-alkyle, C₂-C₁₀-alcényle, C₆-C₁₅-aryle, arylalkyle comprenant 1 à 10 atomes de carbone dans le radical alkyle et 6 à 20 atomes de carbone dans le radical aryle, -OR^{16B} ou -NR^{16B}R^{17B}, -OC(O)R^{16A}, -O₃SR^{16B}, R^{16B}C(O)-CH- CO-R^{17B}, CO ou deux radicaux X^{B} forment un ligand diène substitué ou non substitué, en particulier un ligand 1,3-diène, et les radicaux X^{B} sont identiques ou différents et peuvent être reliés l'un à l'autre,
s vaut 1 ou 2, avec s étant, en fonction de la valence de M^{1B}, tel que le complexe de type métallocène de formule générale (II) est non chargé,
où
R^{16B} et R^{17B} représentent chacun C₁-C₁₀-alkyle, C₆-C₁₅- aryle, alkylaryle, fluoroalkyle ou fluoroaryle comprenant chacun 1 à 10 atomes de carbone dans le radical alkyle et 6 à 20 atomes de carbone dans le radical aryle.

9. Procédé pour la production de films comprenant l'étape de plastification de la composition de moulage selon l'une quelconque des revendications 1 à 4 à la température de fusion dans la plage de 190 à 230°C, d'extrusion de la composition de moulage plastifiée, et de refroidissement de la composition de moulage extrudée.

10. Film comprenant une composition de moulage selon l'une quelconque des revendications 1 à 4, ladite composition de moulage étant présente en une teneur de 50 à 100% en poids basée sur le matériau polymère total.

11. Film selon la revendication 10, comprenant en outre 0 à 30% en poids d'au moins un additif.

12. Utilisation d'un film selon la revendication 10 ou 11 pour la production de sacs en plastique.

13. Utilisation d'un film selon la revendication 10 ou 11 pour la production de couches scellables à chaud dans l'emballage alimentaire.
